(19) Europäisches Patentamt
European Patent Office
Office européen des brevets

(11) **EP 4 589 553 A1**

(12) **EUROPEAN PATENT APPLICATION**
published in accordance with Art. 153(4) EPC

(43) Date of publication:
**23.07.2025 Bulletin 2025/30**

(21) Application number: **24783976.4**

(22) Date of filing: **07.02.2024**

(51) International Patent Classification (IPC):
*G06V 40/16* (2022.01)   *G06V 20/40* (2022.01)
*G06V 10/82* (2022.01)   *G06N 3/044* (2023.01)

(52) Cooperative Patent Classification (CPC):
**G06N 3/044; G06V 10/82; G06V 20/40; G06V 40/16**

(86) International application number:
**PCT/CN2024/076626**

(87) International publication number:
**WO 2024/207891 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.04.2023 CN 202310401592**

(71) Applicant: **Tencent Technology (Shenzhen)
Company Limited
Shenzhen, Guangdong 518057 (CN)**

(72) Inventors:
• LI, Bo
  Shenzhen, Guangdong 518057 (CN)
• WANG, Hanyang
  Shenzhen, Guangdong 518057 (CN)
• WU, Shuang
  Shenzhen, Guangdong 518057 (CN)
• DING, Shouhong
  Shenzhen, Guangdong 518057 (CN)

(74) Representative: **EP&C
P.O. Box 3241
2280 GE Rijswijk (NL)**

(54) **DYNAMIC FACIAL EXPRESSION RECOGNITION METHOD AND APPARATUS, AND DEVICE AND STORAGE MEDIUM**

(57)     Disclosed in the embodiments of the present disclosure are a dynamic facial expression recognition method and apparatus, and a device and a medium, which can be applied to various scenarios, such as intelligent transportation, assisted driving, cloud technology and artificial intelligence. The method comprises: segmenting a video to be subjected to recognition into a plurality of video clips, wherein each video clip includes at least one facial image frame; for each video clip, extracting and aggregating features of the facial image frame in the video clip by using a 3D convolutional network, so as to obtain target feature data of the video clip, wherein the target feature data of the video clip includes a temporal relationship between the facial image frame; aggregating target feature data of the plurality of video clips, so as to obtain target feature data of said video, wherein the target feature data of said video includes a temporal relationship between the plurality of video clips; and on the basis of the target feature data of said video, determining an expression label to which said video belongs, so as to obtain an expression recognition result of said video, wherein the expression recognition result is used by a video server for performing video distribution and search.

FIG. 1

**Description**

RELATED APPLICATION

This application claims priority to Chinese Patent Application No. 202310401592.7, filed with the China National Intellectual Property Administration on April 7, 2023 and entitled "FACIAL EXPRESSION RECOGNITION METHOD AND APPARATUS, DEVICE, AND MEDIUM", which is incorporated herein by reference in its entirety.

FIELD OF THE TECHNOLOGY

The present disclosure relates to the field of computer technologies, and specifically, to a dynamic facial expression recognition method and apparatus, an electronic device, and a computer-readable medium.

BACKGROUND OF THE DISCLOSURE

Facial expression recognition is an important research direction in the fields such as computer vision, human-computer interaction, and pattern recognition, and has attracted wide attention of researchers at home and abroad. An image-based facial expression recognition method includes limited expression information and therefore are susceptible to factors such as an external environment and individual differences. In addition, with the rapid development of computer technologies in recent years, video-based dynamic facial expression recognition has gained more attention.

SUMMARY

Embodiments of the present disclosure provide a dynamic facial expression recognition method and apparatus, a device, and a medium.

An embodiment of the present disclosure provides a dynamic facial expression recognition method. The method includes: segmenting a video into a plurality of video segments, each video segment including at least two face image frames; extracting a feature from each face image frame of the respective video segment using a 3D convolutional network and aggregating the feature of each face image frame using the 3D convolutional network, to obtain first feature data of the respective video segment; aggregating the first feature data of the plurality of video segments, to obtain second feature data of the video; and determining an expression label of the video based on the second feature data.

An embodiment of the present disclosure provides a dynamic facial expression recognition apparatus. The apparatus includes: a segmentation processing module, configured to segment a video into a plurality of video segments, each video segment including at least two face image frames; a first aggregation module, configured to: extract a feature from each face image frame of the respective video segment using a 3D convolutional network and aggregating the feature of each face image frame, to obtain first feature data of the respective video segment; a second aggregation module, configured to aggregate the first feature data of the plurality of video segments, to obtain second feature data of the video; and a recognition module, configured to determine an expression label of the video.

An embodiment of the present disclosure provides an electronic device. The electronic device includes one or more processors; and a memory, configured to store one or more programs, the one or more programs, when executed by the one or more processors, causing the electronic device to implement the foregoing dynamic facial expression recognition method.

An embodiment of the present disclosure provides a computer-readable medium. The computer-readable medium has a computer program stored therein, the computer program, when executed by a processor, causing the foregoing dynamic facial expression recognition method to be implemented.

An embodiment of the present disclosure provides a computer program product. The computer program product includes computer instructions, the computer instructions, when executed by a processor, causing the foregoing dynamic facial expression recognition method to be implemented.

The foregoing general descriptions and the following detailed descriptions are merely for illustration and explanation purposes and are not intended to limit the present disclosure.

BRIEF DESCRIPTION OF THE DRAWINGS

FIG. 1 is a schematic diagram of an exemplary implementation environment in which a technical solution of embodiments of the present disclosure may be applied.

FIG. 2 is a flowchart of a dynamic facial expression recognition method according to some embodiments of the present disclosure.

FIG. 3 is another flowchart of a dynamic facial expression recognition method according to some other embodiments of the present disclosure.

FIG. 4 is another flowchart of a dynamic facial expression recognition method according to some embodiments of the present disclosure.

FIG. 5 is another flowchart of a dynamic facial expression recognition method according to some embodiments of the present disclosure.

FIG. 6 is another flowchart of a dynamic facial expression recognition method according to some embodiments of the present disclosure.

FIG. 7 is another flowchart of a dynamic facial expression recognition method according to some embodiments of the present disclosure.

FIG. 8 is another flowchart of a dynamic facial expression recognition method according to some embodiments of the present disclosure.

FIG. 9 is another flowchart of a dynamic facial expression recognition method according to some embodiments of the present disclosure.

FIG. 10 is another flowchart of a dynamic facial expression recognition method according to some embodiments of the present disclosure.

FIG. 11 is another flowchart of a dynamic facial expression recognition method according to some embodiments of the present disclosure.

FIG. 12 is another flowchart of a dynamic facial expression recognition method according to some embodiments of the present disclosure.

FIG. 13 is a schematic diagram of a dynamic facial expression recognition method according to some embodiments of the present disclosure.

FIG. 14 is a schematic diagram of a long temporal dynamic instance aggregation module according to some embodiments of the present disclosure.

FIG. 15 is a schematic diagram of a multi-instance dynamic regularization network according to some embodiments of the present disclosure.

FIG. 16 is a block diagram of a dynamic facial expression recognition apparatus according to some embodiments of the present disclosure.

FIG. 17 is a schematic structural diagram of a computer system of an electronic device suitable for implementing the embodiments of the present disclosure.

DESCRIPTION OF EMBODIMENTS

Exemplary embodiments are described in detail herein, and examples of the exemplary embodiments are shown in the accompanying drawings. When the following descriptions relate to the accompanying drawings, unless otherwise indicated, same numbers in different accompanying drawings represent same or similar elements. The implementations described in the following exemplary embodiments do not represent all implementations the same as the present disclosure. On the contrary, the implementations are merely examples of apparatuses and methods that are the same as those in some aspects of the present disclosure and that are described in detail in the appended claims.
The block diagrams shown in the accompany drawings are merely functional entities and do not definitely correspond to physically independent entities. That is, the functional entities may be implemented in a software form, or in one or more hardware modules or integrated circuits, or in different networks and/or processor apparatuses and/or microcontroller apparatuses.

The flowcharts shown in the accompanying drawings are merely examples for descriptions, do not definitely include all content and operations/steps, and are not definitely performed in the described sequences. For example, some operations/blocks may be further divided, while some operations/blocks may be combined or partially combined. Therefore, an actual execution sequence may change according to an actual case.

"Plurality of" mentioned in the present disclosure means two or more. "And/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

Facial expression recognition is an important research direction in the fields such as computer vision, human-computer interaction, and pattern recognition, and has attracted wide attention of researchers at home and abroad. An image-based facial expression recognition method includes limited expression information and therefore are susceptible to factors such as an external environment and individual differences. In addition, with the rapid development of computer technologies in recent years, video-based dynamic facial expression recognition has gained more attention.

Currently, during video-based dynamic facial expression recognition, an object may have facial movements such as speaking. Although these facial movements usually have slight differences, the facial movements may affect the accuracy of facial expression recognition to some extent.

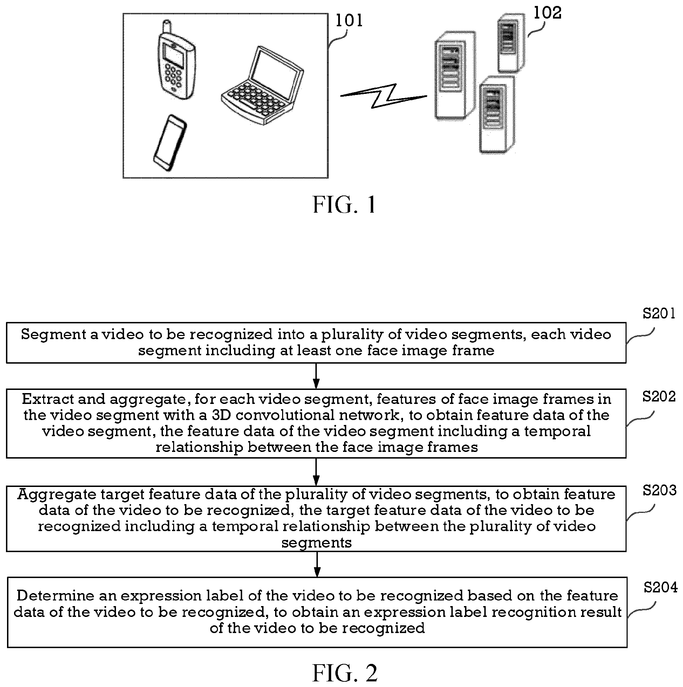

Therefore, to improve the accuracy of facial expression recognition, the present disclosure provides a dynamic facial expression recognition solution. FIG. 1 is a schematic diagram of an implementation environment according to the present disclosure. The implementation environment mainly includes a terminal device 101 and a server 102. The terminal device 101 and the server 102 may communicate with each other using a wired or wireless network.

The terminal device 101 includes, but is not limited to, a smartphone, a tablet, a notebook computer, a computer, an intelligent voice interaction device, an intelligent home appliance, an in-vehicle terminal, an aircraft, and the like.

The server 102 may be a server providing various services. The server 102 may be an independent physical server, or may be a server cluster including a plurality of physical servers or a distributed system, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform, but is not limited thereto.

Quantities of terminal devices 101 and servers 102 in FIG. 1 are merely exemplary, and there may be any quantity of terminal devices 101 and servers 102 according to an actual requirement.

In some embodiments of the present disclosure, a dynamic facial expression recognition method may be jointly performed by the terminal device 101 and the server 102.

For example, the terminal device 101 captures a video to be recognized, and sends the video to be recognized to the server 102. Correspondingly, the server 102 receives the video to be recognized sent by the terminal device 101, and segments the video to be recognized, to obtain a plurality of video segments; performs, based on face image frames included in each video segment, aggregation processing on features between the face image frames, to obtain feature data of each video segment; performs aggregation processing on features between the video segments based on feature data of the plurality of video segments, to obtain feature data of the video to be recognized; and recognizes an expression label of the video to be recognized based on the feature data of the video to be recognized, to obtain an expression label recognition result of the video to be recognized.

The dynamic facial expression recognition method may alternatively be performed by the terminal device 101 alone, or may be performed by the server 102 alone. In actual application, flexible adjustment may be performed according to a specific application scenario.

The technical solution of the embodiment shown in FIG. 1 may be applied to various scenarios.

For example, if the technical solution is applied to a scenario involving entertainment such as live streaming, by implementing the solution of this embodiment of the present disclosure, a facial expression of a live streamer included in a live streaming video can be accurately recognized, thereby improving the live streaming experience of a related user, and the like.

For example, if the technical solution is applied to a scenario involving Internet of Vehicles such as driving, by implementing the solution of this embodiment of the present disclosure, a facial expression of a driver included in a transmitted video can be accurately recognized, thereby improving the road safety, and the like.

For example, if the technical solution is applied to a management scenario involving area management such as a garage or a store, by implementing the solution of this embodiment of the present disclosure, a facial expression of an entering and leaving person included in a management video can be accurately recognized, thereby improving the accuracy of area management, ensuring the safety of related items, and the like.

In specific implementations of the present disclosure, data related to a user is involved. When the following embodiments of the present disclosure are applied to a specific product or technology, user permission or consent needs to be obtained, and collection, use, and processing of the related data need to comply with related laws and regulations and standards of related countries and regions.

The following describes various implementation details of the technical solutions of the embodiments of the present disclosure in detail.

FIG. 2 is a flowchart of a dynamic facial expression recognition method according to some embodiments of the present disclosure. The dynamic facial expression recognition method may be performed by the server 102. As shown in FIG. 2, the dynamic facial expression recognition method includes at least S201 to S204, which are described in detail as follows.

S201: Segment a video to be recognized into a plurality of video segments, each video segment including at least one face image frame.

The video to be recognized in this embodiment of the present disclosure is a video that requires facial expression recognition. In some embodiments, the at least one face image frame corresponds to a continuous facial movement.

The video to be recognized in this embodiment of the present disclosure may be a video generated in any scenario. For example, the video to be recognized may be a video generated by a live streaming terminal in a live streaming scenario, or may be a video generated by an in-vehicle terminal in an Internet of Vehicles scenario, or may be a video generated by a camera in a management scenario of a specific area. In actual application, the video to be recognized may be flexibly adjusted according to a specific application scenario.

In some related arts, a video is generally segmented into different segments by frame. However, for a dynamic expression, when an object is speaking, some individual frames cannot form a normal facial expression. From the perspective of only one frame, these frames are abnormal, and actually represent a process of facial movements. In addition, these facial movements and inter-class differences are slight, resulting in even small movements causing changes in extracted features and predicted expressions during classification.

In the embodiments of the present disclosure including the embodiments of both the claims and the specification (hereinafter referred to as "all embodiments of the present disclosure"), after obtaining the video to be recognized, the server may segment the video to be recognized, to obtain a plurality of video segments. Each video segment can include a continuous facial movement, to correspondingly prepare for subsequent facial expression recognition of the video to be recognized. The video to be recognized and the plurality of video segments are in a one-to-many relationship, that is, one video to be recognized is segmented into a plurality of video segments. For example, the video to be recognized is represented by $V$, and the video to be recognized $V$ may be segmented into $N$ video segments, where $N \geq 2$ and $N$ is an integer.

In all embodiments of the present disclosure, the video to be recognized is segmented, and each of the plurality of obtained video segments includes an image frame including a face, that is, each video segment includes at least one image frame including a face. The image frame including a face is referred to as a face image frame below. A quantity of face image frames included in each video segment may be the same or may be different. In actual application, the quantity of face image frames included in each video segment may be flexibly adjusted according to a specific application scenario.

S202: Extract and aggregate, for each video segment, features of face image frames in the video segment using a 3D convolutional network, to obtain feature data of the video segment, the feature data of the video segment including a temporal relationship between the face image frames.

In all embodiments of the present disclosure, after segmenting the video to be recognized, to obtain the plurality of video segments, the server may perform aggregation processing on the features between the face image frames based on the face image frames included in each video segment, to obtain feature data of each video segment.

In some embodiments, the 3D convolutional network may be a residual 3D (R3D) network, which includes a series of 3D convolutional layers, maximum pooling layers, and fully connected layers, to capture a spatio-temporal relationship between video frames, thereby implementing movement recognition.

The temporal relationship between the face image frames, or referred to as a short-term temporal relationship, refers to a short-term dependency relationship between the face image frames in the video segment. A temporal dependency between the face image frames can be captured using a temporal convolutional layer of the 3D convolutional network.

In all embodiments of the present disclosure, the feature data of each video segment means that each video segment has its corresponding feature data. The feature data corresponding to the video segment refers to feature data obtained after aggregation processing is performed on the features corresponding to face image frames included in the video segment.

For example, still using the foregoing example, it is assumed that $N = 5$, that is, there are five video segments, and the five video segments are respectively $I_1$-$I_5$. Using the video segment $I_1$ as an example, it is assumed that the video segment $I_1$ includes 300 face image frames, and aggregation processing is performed on features corresponding to the 300 face image frames included in the video segment $I_1$, to obtain feature data of the video segment $I_1$. By analogy, feature data respectively corresponding to the other video segments $I_2$-$I_5$ can be obtained. Details are not described herein again.

In all embodiments of the present disclosure, S202 may include:

respectively extracting the features of the face image frames in the video segment using the 3D convolutional network, to obtain image features of each face image frame;

sequentially inputting, for any video segment, the face image frames included in the video segment into the 3D convolutional network in sequence; and

extracting and aggregating the features of the plurality of face image frames using the 3D convolutional network, to obtain the feature data of the video segment.

The extracting and aggregating the features of the plurality of face image frames using the 3D convolutional network, to obtain the feature data of the video segment includes:

sequentially extracting three-dimensional feature data of the plurality of face image frames; and

concatenating the extracted three-dimensional feature data in sequence, to obtain the feature data of the video segment.

That is, the server first extracts the features of the face image frames included in each video segment, to obtain the image features of each video segment, and then performs, for each video segment, aggregation processing on the image features corresponding to the video segment, to obtain the feature data of the video segment.

For example, still using the foregoing example, the video segment $I_1$ is used as an example. First, the features of the 300 frames included in the video segment $I_1$ are extracted, and it is assumed that the extracted image features $F'$ are [$f1$, $f2$, $f3$, ..., $f298$, $f299$, $f300$]. Then, aggregation processing is performed on [$f1$, $f2$, $f3$, ..., $f298$, $f299$, $f300$], to obtain feature data $F_1$ of the video segment $I_1$. By analogy, feature data $F_2$-$F_5$ respectively corresponding to the other video segments $I_2$-$I_5$ can be obtained. Details are not described herein again.

In S202, starting from the fine granularity dimension of the face image frame, aggregation processing is performed on the features corresponding to the face image frames included in the video segment, to establish an association between the face image frames in the video segment, that is, establish an association between the face image frames inside the video segment, to obtain more accurate feature data of the video segment.

S203: Aggregate feature data of the plurality of video segments, to obtain feature data of the video to be recognized, the feature data of the video to be recognized including a temporal relationship between the plurality of video segments.

In all embodiments of the present disclosure, after performing aggregation processing on the features between the face image frames based on the face image frames included in each video segment, to obtain the feature data of each video segment, the server may perform aggregation processing on the features between the video segments based on the feature data of the plurality of video segments, to obtain the feature data of the video to be recognized.

In all embodiments of the present disclosure, the feature data of the video to be recognized refers to feature data obtained after aggregation processing may be performed on the feature data of the plurality of video segments.

For example, still using the foregoing example, assuming that the feature data respectively corresponding to the video segments $I_2$-$I_5$ is $F_1$-$F_5$, aggregation processing is performed on the feature data $F_1$-$F_5$ respectively corresponding to the video segments $I_2$-$I_5$, to obtain feature data $F$ of the video to be recognized $V$.

In S203, starting from the coarse granularity dimension of the video segment, aggregation processing is performed on the feature data corresponding to the plurality of video segments included in the video to be recognized, to establish an association between the video segments in the video to be recognized, that is, establish an association between the video segments inside the video to be recognized, to obtain more accurate feature data of the video to be recognized.

S204: Determine an expression label of the video to be recognized based on the feature data of the video to be recognized, to obtain an expression label recognition result of the video to be recognized.

In all embodiments of the present disclosure, after performing aggregation processing on the features between the video segments based on the feature data of the plurality of video segments, to obtain the feature data of the video to be recognized, the server may recognize, based on the feature data of the video to be recognized, the expression label of the video to be recognized, to obtain the expression label recognition result of the video to be recognized. The expression label recognition result is used by a video server for video distribution and search.

In all embodiments of the present disclosure, the expression label recognition result of the video to be recognized may be an expression label of the video to be recognized. The expression label includes, but is not limited to, a joy label, a sadness label, an anger label, a panic label, a disgust label, and the like. In actual application, the expression label may be flexibly adjusted according to a specific application scenario.

For example, the video to be recognized may have one expression label, such as any one of the joy label, the sadness label, the anger label, the panic label, or the disgust label.

For example, the video to be recognized may have a plurality of expression labels, such as any two or more of the joy label, the sadness label, the anger label, the panic label, or the disgust label.

In all embodiments of the present disclosure, the server may establish a short-term temporal association between the face image frames and a long-term temporal association between the video segments by starting from the fine granularity dimension of the face image frame and the coarse granularity dimension of the video segment simultaneously, thereby reducing the impact caused by facial movements of the object on feature data, and starting from overall features of the video to be recognized as much as possible, so that the obtained feature data of the video to be recognized is more accurate. Further, the expression label of the video to be recognized is determined based on the more accurate feature data of the video to be recognized, so that a more accurate expression label recognition result of the video to be recognized can be obtained, thereby improving the accuracy of facial expression recognition.

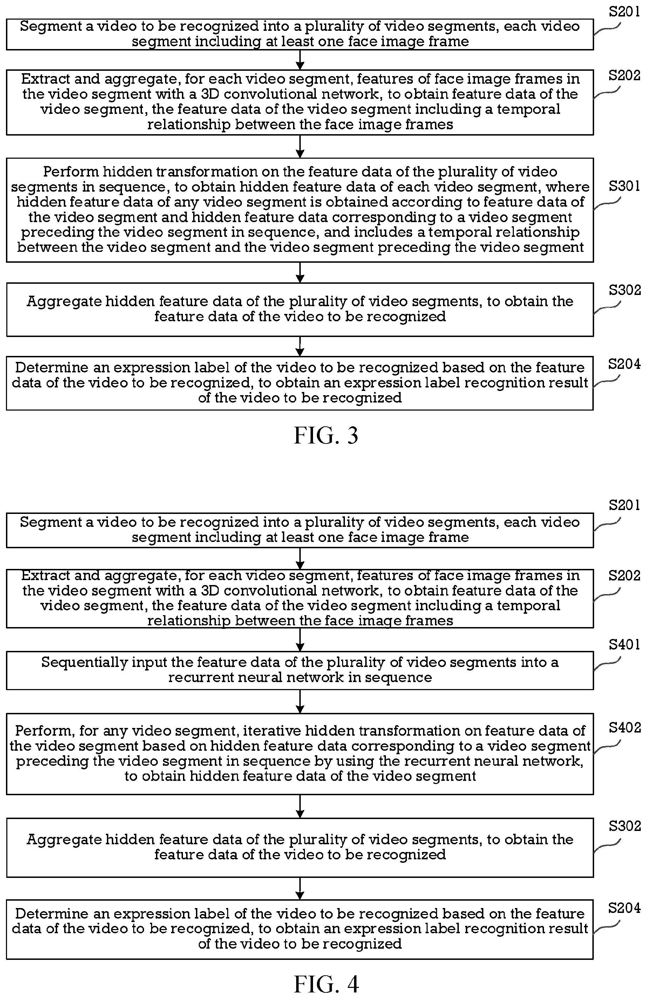

In some embodiments of the present disclosure, another dynamic facial expression recognition method is provided. The dynamic facial expression recognition method may be performed by the server 102. As shown in FIG. 3, the dynamic facial expression recognition method may include S301 to S302, S201 to S202, and S204.

S301 to S302 are described in detail as follows.

S301: Perform hidden transformation on the feature data of the plurality of video segments in sequence, to obtain hidden feature data of each video segment, where

hidden feature data of any video segment is obtained according to feature data of the video segment and hidden feature data corresponding to a video segment preceding the video segment in sequence, and includes a temporal relationship between the video segment and the video segment preceding the video segment.

In all embodiments of the present disclosure, the sequence may refer to a chronological sequence of the plurality of video segments. Correspondingly, the temporal relationship refers to a chronological relationship of the plurality of video segment.

For example, still using the foregoing example, it is assumed that the video to be recognized $V$ is a 25-second video segment from 09:00:00 to 09:00:25, the video to be recognized $V$ is sequentially segmented into 5 video segments in sequence, and the 5 video segments are respectively video segments $I_1$-$I_5$. The video segment $I_1$ corresponds to 09:00:00-09:00:05, the video segment $I_2$ corresponds to 09:00:05-09:00:10, the video segment $I_3$ corresponds to 09:00:10-09:00:15, the video segment $I_4$ corresponds to 09:00:15-09:00:20, and the video segment $I_5$ corresponds to 09:00:20-09:00:25. Therefore, a sequence or temporal relationship between the video segments $I_1$-$I_5$ is that the video segment $I_1$ is the video segment of the first 5 seconds, the video segment $I_2$ is the adjacent video segment 5 seconds after the video segment $I_1$, the video segment $I_3$ is the adjacent video segment 5 seconds after the video segment $I_2$, the video segment $I_4$ is the adjacent video segment 5 seconds after the video segment $I_3$, and the video segment $I_5$ is the adjacent video segment 5 seconds after the video segment $I_4$.

Any video segment in the embodiments of the present disclosure refers to each of the plurality of video segments.

For example, still using the foregoing example, the video segment $I_1$, the video segment $I_2$, the video segment $I_3$, the video segment $I_4$, and the video segment $I_5$ are any video segment.

A video segment preceding any video segment in this embodiment of the present disclosure refers to a video segment earlier than any video segment.

In all embodiments of the present disclosure, a video segment preceding any video segment may be an adjacent or non-adjacent video segment earlier than any video segment.

For example, still using the foregoing example, assuming that the video segment $I_3$ is any video segment, an adjacent video segment earlier than the video segment $I_3$ is the video segment $I_2$, and a non-adjacent video segment earlier than the video segment $I_3$ is the video segment $I_1$. In this case, a video segment preceding the video segment $I_3$ may be at least one of the video segment $I_2$ or the video segment $I_1$.

In all embodiments of the present disclosure, there may be one or more video segments preceding any video segment.

For example, still using the foregoing example, when there is one video segment preceding the video segment $I_3$, the video segment may be the video segment $I_2$ or the video segment $I_1$; and when there are a plurality of video segments preceding the video segment $I_3$, the video segments may be the video segment $I_2$ and the video segment $I_1$.

In all embodiments of the present disclosure, the hidden feature data of any video segment may refer to feature data obtained after hidden transformation is performed on feature data of the video segment based on hidden feature data corresponding to a video segment preceding the video segment.

For example, still using the foregoing example, if a video segment preceding the video segment $I_3$ is the video segment $I_2$, hidden transformation is performed on feature data of the video segment $I_3$ based on hidden feature data corresponding to the video segment $I_2$, to obtain hidden feature data of the video segment $I_3$.

If a video segment preceding the video segment $I_2$ is the video segment $I_1$, hidden transformation is performed on feature data of the video segment $I_2$ based on hidden feature data corresponding to the video segment $I_1$, to obtain the hidden feature data of the video segment $I_2$.

If a video segment preceding the video segment $I_3$ is the video segment $I_1$, hidden transformation is performed on the feature data of the video segment $I_3$ based on hidden feature data corresponding to the video segment $I_1$, to obtain the hidden feature data of the video segment $I_3$.

Since there is no video segment preceding the video segment $I_1$, hidden transformation is performed on feature data of the video segment $I_1$, to obtain the hidden feature data of the video segment $I_1$.

If video segments preceding the video segment $I_3$ are the video segment $I_2$ and the video segment $I_1$, hidden transformation is performed on the feature data of the video segment $I_3$ based on the hidden feature data corresponding to the video segment $I_2$ and the hidden feature data corresponding to the video segment $I_1$, to obtain the hidden feature data of the video segment $I_3$.

Similarly, processes of obtaining hidden feature data respectively corresponding to the other video segments $I_4$-$I_5$ can be deduced by analogy. Details are not described herein again.

The hidden transformation in this embodiment of the present disclosure refers to abstracting the feature data of the video segment to another dimensional space, to obtain more abstract features, so that these more abstract features can be better used for linear division and the like.

S302: Aggregate hidden feature data of the plurality of video segments, to obtain the feature data of the video to be recognized.

In all embodiments of the present disclosure, after performing hidden transformation on the feature data of the plurality of video segments in sequence, to obtain the hidden feature data of each video segment, the server may aggregate the hidden feature data of the plurality of video segments, to obtain the feature data of the video to be recognized.

That is, in this embodiment of the present disclosure, starting from the coarse granularity dimension of the video segment, specifically, aggregation processing is performed on the hidden feature data corresponding to the plurality of video segments included in the video to be recognized, to establish an accurate association between the video segment in the video to be recognized.

For detailed descriptions of S201 to S202, and S204 shown in FIG. 3, refer to S201 to S202, and S204 shown in FIG. 2. Details are not described herein again.

In all embodiments of the present disclosure, the server may capture the association between the video segment by performing hidden transformation on the feature data of each video segment, so that the obtained feature data of the video to be recognized is more accurate, thereby more accurately recognizing the expression label of the video to be recognized based on the more accurate feature data of the video to be recognized, and improving the accuracy of facial expression recognition.

In some embodiments of the present disclosure, another dynamic facial expression recognition method is provided. The dynamic facial expression recognition method may be performed by the server 102. As shown in FIG. 4, the dynamic facial expression recognition method may include S401 to S402, S302, S201 to S202, and S204.

S401 to S402 are described in detail as follows.

S401: Sequentially input the feature data of the plurality of video segments into a recurrent neural network in sequence.

In all embodiments of the present disclosure, the recurrent neural network (RNN) may refer to a network for storing a final output in its own internal memory to memorize a previous state of data. It uses a previous output and a data state, which essentially affects final output data. Its working principle is similar to that of a common layer in a multilayer perceptron, but it uses a state matrix to calculate a new output.

For example, the recurrent neural network may be a long short-term memory (LSTM) network. The long short-term memory network is further extended to store a state matrix as two states (that is, a long-term state and a short-term state). If the state matrix persists in a model output, it is stored as a long-term state matrix, and occupies a larger weight when new data is considered.

S402: Perform, for any video segment, iterative hidden transformation on feature data of the video segment based on hidden feature data corresponding to a video segment preceding the video segment in sequence using the recurrent neural network, to obtain hidden feature data of the video segment.

In all embodiment of the present disclosure, the server may sequentially input the feature data of the plurality of video segments into the recurrent neural network in sequence, and then may perform iterative hidden transformation on feature data of a current video segment based on hidden feature data corresponding to a video segment preceding the current video segment in sequence using the recurrent neural network, to obtain hidden feature data of the current video segment.

For example, still using the foregoing example, for the video segment $I_1$, the video segment $I_1$ is inputted into the recurrent neural network, and iterative hidden transformation is performed on the feature data $F_1$ corresponding to the video segment $I_1$ using the recurrent neural network, to obtain hidden feature data $X_1$ corresponding to the video segment $I_1$.

For the video segment $I_2$, the video segment $I_2$ is inputted into the recurrent neural network, and iterative hidden transformation is performed on the feature data $F_2$ corresponding to the video segment $I_2$ based on the hidden feature data corresponding to the video segment $I_1$ preceding the video segment $I_2$ using the recurrent neural network, to obtain hidden feature data $X_2$ corresponding to the video segment $I_2$.

For the video segment $I_3$, the video segment $I_3$ is inputted into the recurrent neural network, and iterative hidden transformation is performed on the feature data $F_3$ corresponding to the video segment $I_3$ based on the hidden feature data corresponding to the video segment $I_2$ preceding the video segment $I_3$ using the recurrent neural network, to obtain hidden feature data $X_3$ corresponding to the video segment $I_3$.

For the video segment $I_4$, the video segment $I_4$ is inputted into the recurrent neural network, and iterative hidden transformation is performed on the feature data $F_4$ corresponding to the video segment $I_4$ based on the hidden feature data corresponding to the video segment $I_3$ preceding the video segment $I_4$ using the recurrent neural network, , to obtain hidden feature data $X_4$ corresponding to the video segment $I_4$.

For the video segment $I_5$, the video segment $I_5$ is inputted into the recurrent neural network, and iterative hidden transformation is performed on the feature data $F_5$ corresponding to the video segment $I_5$ based on the hidden feature data corresponding to the video segment $I_4$ preceding the video segment $I_5$ using the recurrent neural network, to obtain hidden feature data $X_5$ corresponding to the video segment $I_5$.

For detailed descriptions of S302 shown in FIG. 4, refer to S302 shown in FIG. 3. For detailed descriptions of S201 to S202, and S204 shown in FIG. 4, refer to S201 to S202, and S204 shown in FIG. 2. Details are not described herein again.

In all embodiments of the present disclosure, the server may perform iterative hidden transformation on the feature data of any video segment using the recurrent neural network, to obtain the hidden feature data of the video segment. In this way, the long-term temporal association between the video segments is quickly established, and the process is simple and easy to implement.

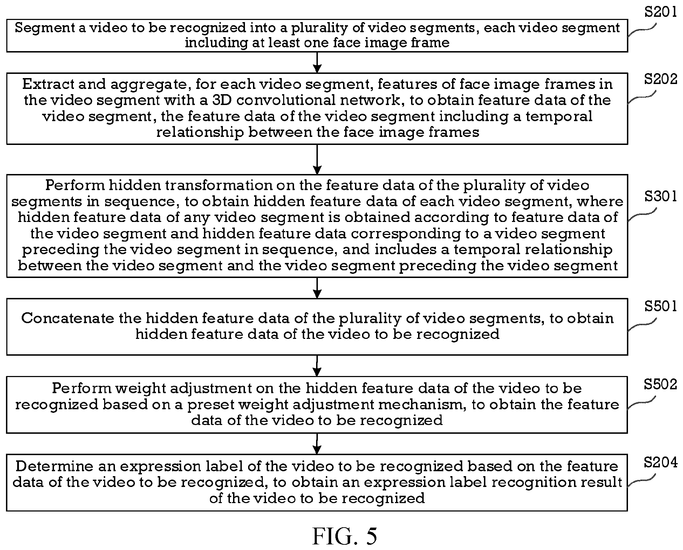

In some embodiments of the present disclosure, another dynamic facial expression recognition method is provided. The dynamic facial expression recognition method may be performed by the server 102. As shown in FIG. 5, the dynamic facial expression recognition method may include S501 to S502, S301, S201 to S202, and S204.

S501: Concatenate the hidden feature data of the plurality of video segments, to obtain hidden feature data of the video to be recognized.

In all embodiments of the present disclosure, after sequentially performing hidden transformation on the feature data of the plurality of video segments, to obtain the hidden feature data of each video segment, the server may concatenate the hidden feature data of the plurality of video segments, to obtain the hidden feature data of the video to be recognized.

For example, still using the foregoing example, assuming that the hidden feature data respectively corresponding to the video segments $I_1$-$I_5$ is $X_1$-$X_5$, the hidden feature data $X_1$-$X_5$ is concatenated, to obtain hidden feature data $X$ of the video to be recognized.

In all embodiments of the present disclosure, the process of concatenating the hidden feature data of the plurality of video segments, to obtain hidden feature data of the video to be recognized in S501 may include: concatenating the hidden feature data of the plurality of video segments in sequence, to obtain the hidden feature data of the video to be recognized.

For example, still using the foregoing example, concatenation may be performed according to a sequence of $X_1$, $X_2$, $X_3$, $X_4$, and $X_5$, that is, $X_1 + X_2 + X_3 + X_4 + X_5$, to obtain the hidden feature data of the video to be recognized V.

The hidden feature data of the plurality of video segments is concatenated in sequence, so that more associations between the video segments can be captured.

In other embodiments, the server may further randomly concatenate the hidden feature data of the plurality of video segments (that is, concatenate the hidden feature data of the plurality of video segments out of sequence). In actual application, concatenating the hidden feature data of the plurality of video segments may be flexibly adjusted according to a specific application scenario.

The hidden feature data of the plurality of video segments is randomly concatenated, so that the concatenating efficiency is higher, and the hidden feature data of the video to be recognized can be quickly obtained.

S502: Perform weight adjustment on the hidden feature data of the video to be recognized based on a preset weight adjustment mechanism, to obtain the feature data of the video to be recognized.

In all embodiments of the present disclosure, after concatenating the hidden feature data of the plurality of video segments, to obtain the hidden feature data of the video to be recognized, the server may perform weight adjustment on the hidden feature data of the video to be recognized based on the preset weight adjustment mechanism, to obtain the feature data of the video to be recognized.

In all embodiments of the present disclosure, the preset weight adjustment mechanism may be a mechanism preset for weight adjustment on the hidden feature data of the video to be recognized. In actual application, the preset weight adjustment mechanism may be flexibly adjusted according to a specific application scenario.

That is, in this embodiment of the present disclosure, starting from the coarse granularity dimension of the video

EP 4 589 553 A1

segment, after aggregation processing is performed on the hidden feature data corresponding to the plurality of video segments included in the video to be recognized, weight adjustment is further performed on aggregated hidden feature data of the video to be recognized, to establish a more accurate association between the video segments in the video to be recognized.

For detailed descriptions of S301 shown in FIG. 5, refer to S301 shown in FIG. 3. For detailed descriptions of S201 to S202, and S204 shown in FIG. 5, refer to S201 to S202, and S204 shown in FIG. 2. Details are not described herein again.

In all embodiments of the present disclosure, the server may concatenate the hidden feature data of the plurality of video segments, thereby implementing quick aggregation processing on the hidden feature data between the video segments. The process is simple and easy to implement. In addition, weight adjustment is performed on the hidden feature data of the video to be recognized, so that more accurate feature data of the video to be recognized can be obtained, thereby more accurately recognizing the expression label of the video to be recognized based on the more accurate feature data of the video to be recognized, and further improving the accuracy of facial expression recognition.

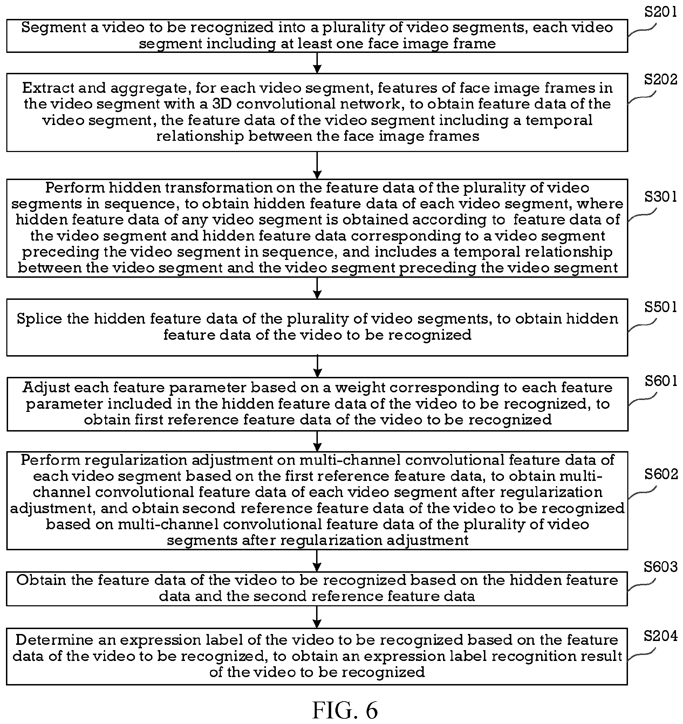

In some embodiments of the present disclosure, another dynamic facial expression recognition method is provided. The dynamic facial expression recognition method may be performed by the server 102. As shown in FIG. 6, the dynamic facial expression recognition method may include S601 to S603, S501, S301, S201 to S202, and S204.

In all embodiment of the present disclosure, the hidden feature data of the video to be recognized may include a plurality of feature parameters. For example, the hidden feature data of the video to be recognized may be a hidden feature matrix, that is, the hidden feature data of the video to be recognized is represented based on a matrix. The matrix includes rows and columns. Generally, a quantity of the rows is greater than 1, and a quantity of the columns is greater than 1, that is, the hidden feature matrix includes a plurality of feature parameters.

S601 to S603 are described in detail as follows.

S601: Adjust each feature parameter included in the hidden feature data of the video to be recognized based on a weight corresponding to each feature parameter, to obtain first reference feature data of the video to be recognized.

In all embodiments of the present disclosure, the weight corresponding to each feature parameter may mean that each feature parameter has its corresponding weight, and the weight may be preset.

In all embodiment of the present disclosure, the first reference feature data of the video to be recognized may be data obtained after weight adjustment is performed on each feature parameter included in the hidden feature data of the video to be recognized.

In all embodiments of the present disclosure, after obtains the hidden feature data of the video to be recognized, the server may adjust each feature parameter based on the weight corresponding to each feature parameter included in the hidden feature data, to obtain the first reference feature data of the video to be recognized.

S602: Perform regularization adjustment on multi-channel convolutional feature data of each video segment based on the first reference feature data, to obtain multi-channel convolutional feature data of each video segment after regularization adjustment, and obtain second reference feature data of the video to be recognized based on multi-channel convolutional feature data of the plurality of video segments after regularization adjustment.

In all embodiments of the present disclosure, the multi-channel convolutional feature data of each video segment may mean that each video segment has its corresponding multi-channel convolutional feature data. The multi-channel convolutional feature data corresponding to the video segment is feature data obtained after multi-channel convolution processing is performed on the feature data of the video segment.

In all embodiments of the present disclosure, the channel may be a channel in a multi-head attention mechanism.

In all embodiments of the present disclosure, regularization adjustment may refer to restricting the multi-channel convolutional feature data, to prevent it from getting out of control, and reducing the degree of dependency on data to prevent overfitting.

In all embodiments of the present disclosure, the second reference feature data of the video to be recognized may be data obtained after aggregation processing is performed on the multi-channel convolutional feature data of the plurality of video segments after regularization adjustment.

In all embodiments of the present disclosure, after obtaining the first reference feature data of the video to be recognized, the server may perform regularization adjustment on the multi-channel convolutional feature data of each video segment based on the first reference feature data, to obtain the multi-channel convolutional feature data of each video segment after regularization adjustment, and obtain the second reference feature data of the video to be recognized based on the multi-channel convolutional feature data of the plurality of video segments after regularization adjustment.

S603: Obtain the feature data of the video to be recognized based on the hidden feature data and the second reference feature data.

In all embodiments of the present disclosure, after obtaining the second reference feature data of the video to be recognized, the server may use the hidden feature data and the second reference feature data of the video to be recognized as the feature data of the video to be recognized.

S601 and S602 shown in FIG. 6 may be performed simultaneously, or may be performed sequentially. In addition, for detailed descriptions of S501 shown in FIG. 6, refer to S501 shown in FIG. 5. For detailed descriptions of S301 shown in FIG. 6, refer to S301 shown in FIG. 3. For detailed descriptions of S201 to S202, and S204 shown in FIG. 6, refer to S201 to S202, and S204 shown in FIG. 2. Details are not described herein again.

In all embodiments of the present disclosure, the server may simultaneously perform weight adjustment on the hidden feature data of the video to be recognized, to obtain the first reference feature data of the video to be recognized, and performs regularization adjustment on the multi-channel convolutional feature data of each video segment in the video to be recognized based on the first reference feature data of the video to be recognized, to obtain the second reference feature data of the video to be recognized, so that the feature data of the video to be recognized that is obtained based on the hidden feature data and the second reference feature data is more accurate.

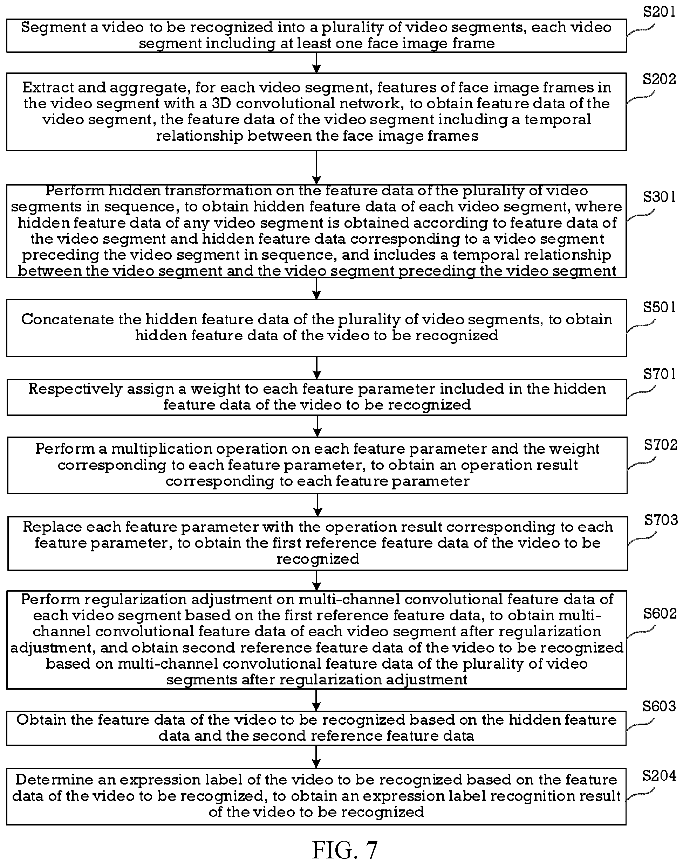

In some embodiments of the present disclosure, another dynamic facial expression recognition method is provided. The dynamic facial expression recognition method may be performed by the server 102. As shown in FIG. 7, the dynamic facial expression recognition method may include S701 to S703, S602, S603, S501, S301, S201 to S202, and S204.

S701 to S703 are described in detail as follows.

S701: Respectively assign a weight to each feature parameter included in the hidden feature data of the video to be recognized.

In all embodiments of the present disclosure, the server may assign a corresponding weight to each feature parameter based on importance of each feature parameter included in the hidden feature data.

For example, the hidden feature data of the video to be recognized is represented by $X$, and it is assumed that the feature parameters included in the hidden feature data $X$ are $x11$, $x12$, $x21$, and $x22$ respectively, that is

$$X = \begin{bmatrix} x11 & x12 \\ x21 & x22 \end{bmatrix}.$$

In this case, corresponding weights are respectively assigned to the feature parameters $x11$, $x12$, $x21$, and $x22$.

S702: Perform a multiplication operation on each feature parameter and the weight corresponding to each feature parameter, to obtain an operation result corresponding to each feature parameter.

In all embodiments of the present disclosure, after assigning a corresponding weight to each feature parameter based on importance of each feature parameter included in the hidden feature data of the video to be recognized, the server may perform the multiplication operation on each feature parameter and the weight corresponding to each feature parameter, to obtain the operation result corresponding to each feature parameter.

For example, still using the foregoing example, if weights respectively corresponding to the feature parameters $x11$, $x12$, $x21$, and $x22$ are $p11$, $p12$, $p21$, and $p22$, the following operations: $p11 * x11$, $p12 * x12$, $p21 * x21$, and $p22 * x22$, are performed to obtain an operation result $p11 * x11$ corresponding to the feature parameter $x11$, an operation result $p12 * x12$ corresponding to the feature parameter $x12$, an operation result corresponding to the feature parameter, an operation result $p21 * x21$ corresponding to the feature parameter $x21$, and an operation result $p22 * x22$ corresponding to the feature parameter $x22$.

S703: Replace each feature parameter with the operation result corresponding to each feature parameter, to obtain the first reference feature data of the video to be recognized.

In all embodiments of the present disclosure, after performing the multiplication operation on each feature parameter and the weight corresponding to each feature parameter, to obtain the operation result corresponding to each feature parameter, the server may replace each feature parameter with the operation result corresponding to each feature parameter, to obtain the first reference feature data of the video to be recognized.

For example, still using the foregoing example, the feature parameter $x11$ is replaced with the operation result $p11 * x11$ corresponding to the feature parameter $x11$, the feature parameter $x12$ is replaced with the operation result $p12 * x12$ corresponding to the feature parameter $x12$, the feature parameter $x21$ is replaced with the operation result $p21 * x21$ corresponding to the feature parameter $x21$, and the feature parameter $x22$ is replaced with the operation result $p22 * x22$ corresponding to the feature parameter $x22$, to obtain first reference feature data $A$ of the video to be recognized $V$, that is:

$$A = \begin{bmatrix} p11 * x11 & p12 * x12 \\ p21 * x21 & p22 * x22 \end{bmatrix}.$$

For detailed descriptions of S602 to S603 shown in FIG. 7, refer to S602 to S603 shown in FIG. 6. For detailed descriptions of S501 shown in FIG. 7, refer to S501 shown in FIG. 5. For detailed descriptions of S301 shown in FIG. 7, refer to S301 shown in FIG. 3. For detailed descriptions of S201 to S202, and S204 shown in FIG. 7, refer to S201 to S202, and S204 shown in FIG. 2. Details are not described herein again.

In all embodiments of the present disclosure, the server may perform weight adjustment processing by

**EP 4 589 553 A1**

distinguishing importance of different feature parameters, so that more accurate first reference feature data of the video to be recognized can be obtained, thereby providing strong support for the subsequent obtaining of more accurate feature data of the video to be recognized.

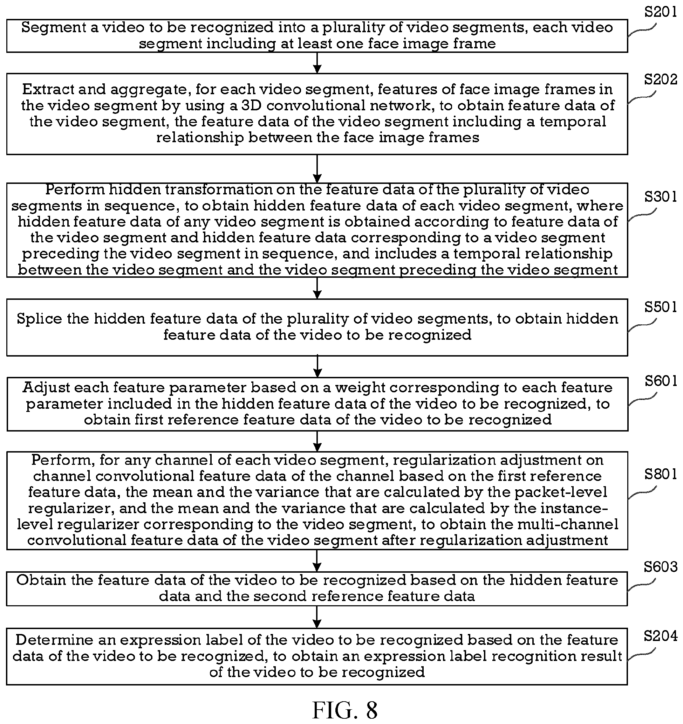

In some embodiments of the present disclosure, another dynamic facial expression recognition method is provided. The dynamic facial expression recognition method may be performed by the server 102. As shown in FIG. 8, the dynamic facial expression recognition method may include S801, S601, S603, S501, S301, S201 to S202, and S204.

In all embodiments of the present disclosure, the video to be recognized may correspond to a packet-level regularizer, where the packet-level regularizer is configured to calculate a mean and a variance of multi-channel convolutional feature data corresponding to the video segments included in the video to be recognized.

In all embodiments of the present disclosure, each video segment may correspond to an instance-level regularizer, where the instance-level regularizer is configured to calculate a mean and a variance of multi-channel convolutional feature data of video segments corresponding to the instance-level regularizer.

S801 is described in detail as follows.

S801: Perform, for any channel of each video segment, regularization adjustment on channel convolutional feature data of the channel based on the first reference feature data, the mean and the variance that are calculated by the packet-level regularizer, and the mean and the variance that are calculated by the instance-level regularizer corresponding to the video segment, to obtain the multi-channel convolutional feature data of the video segment after regularization adjustment.

In all embodiments of the present disclosure, for any channel of each video segment, the server may perform regularization adjustment on the channel convolutional feature data of the channel based on the first reference feature data, the mean and the variance that are calculated by the packet-level regularizer, and the mean and the variance that are calculated by the instance-level regularizer corresponding to the video segment, to obtain the multi-channel convolutional feature data of the video segment after regularization adjustment.

For example, still using the foregoing example, the video segment $I_1$ is used as an example. It is assumed that the video segment $I_1$ corresponds to two channels, and the two channels are respectively $c1$ and $c2$. In this case, regularization adjustment is performed on channel convolutional feature data of the channel $c1$ based on the first reference feature data, the mean and the variance that are calculated by the packet-level regularizer, and the mean and the variance that are calculated by the instance-level regularizer corresponding to the video segment, to obtain convolutional feature data of the channel $c1$ after regularization adjustment on the video segment $I_1$. In addition, regularization adjustment is performed on channel convolutional feature data of the channel $c2$ based on the first reference feature data, the mean and the variance that are calculated by the packet-level regularizer, and the mean and the variance that are calculated by the instance-level regularizer corresponding to the video segment, to obtain convolutional feature data of the channel $c2$ after regularization adjustment on the video segment $I_1$. In this way, the convolutional feature data of the two channels $c1$ and $c2$ after regularization adjustment on the video segment $I_1$ is obtained. By analogy, adjusted multi-channel convolutional feature data respectively corresponding to the other video segments $I_2$-$I_5$ can be obtained. Details are not described herein again.

In all embodiments of the present disclosure, the process of performing regularization adjustment on channel convolutional feature data of the channel based on the first reference feature data, the mean and the variance that are calculated by the packet-level regularizer, and the mean and the variance that are calculated by the instance-level regularizer corresponding to the video segment in S801 may include:

obtaining a weight of the packet-level regularizer and a weight of the instance-level regularizer corresponding to the video segment; and

performing regularization adjustment on the channel convolutional feature data of the channel based on the first reference feature data, the weight of the packet-level regularizer, the mean and the variance that are calculated by the packet-level regularizer, the weight of the instance-level regularizer, and the mean and the variance that are calculated by the instance-level regularizer.

In all embodiments, a weight may be set for the packet-level regularizer, and a weight may also be set for the instance-level regularizer. In actual application, the weight of the packet-level regularizer and the weight of the instance-level regularizer corresponding to the video segment may be flexibly adjusted according to a specific application scenario. Weights of instance-level regularizers corresponding to different video segments may be the same or may be different.

That is, in an embodiment, the server performs regularization adjustment on the channel convolutional feature data of the channel based on the first reference feature data, the weight of the packet-level regularizer, the mean and the variance that are calculated by the packet-level regularizer, the weight of the instance-level regularizer, and the mean and the variance that are calculated by the instance-level regularizer.

For example, still using the foregoing example, regularization adjustment is performed on the channel convolutional feature data of the channel $c1$ based on the first reference feature data, the weight of the packet-level regularizer,

**12**

the mean and the variance that are calculated by the packet-level regularizer, the weight of the instance-level regularizer, and the mean and the variance that are calculated by the instance-level regularizer, to obtain the convolutional feature data of the channel $c1$ after regularization adjustment on the video segment $l_1$. In addition, regularization adjustment is performed on the channel convolutional feature data of the channel $c2$ based on the first reference feature data, the weight of the packet-level regularizer, the mean and the variance that are calculated by the packet-level regularizer, the weight of the instance-level regularizer, and the mean and the variance that are calculated by the instance-level regularizer, to obtain the convolutional feature data of the channel $c2$ after regularization adjustment on the video segment $l_1$. In this way, the convolutional feature data of the two channels $c1$ and $c2$ after regularization adjustment on the video segment $l_1$ is obtained. By analogy, adjusted multi-channel convolutional feature data respectively corresponding to the other video segments $l_2$-$l_5$ can be obtained. Details are not described herein again.

For detailed descriptions of S601 and S603 shown in FIG. 8, refer to S601 and S603 shown in FIG. 6. For detailed descriptions of S501 shown in FIG. 8, refer to S501 shown in FIG. 5. For detailed descriptions of S301 shown in FIG. 8, refer to S301 shown in FIG. 3. For detailed descriptions of S201 to S202, and S204 shown in FIG. 8, refer to S201 to S202, and S204 shown in FIG. 2. Details are not described herein again.

In all embodiments of the present disclosure, the server may perform weight adjustment processing by distinguishing importance of different regularizers, so that more accurate second reference feature data of the video to be recognized can be obtained, thereby providing strong support for subsequent obtaining of more accurate feature data of the video to be recognized.

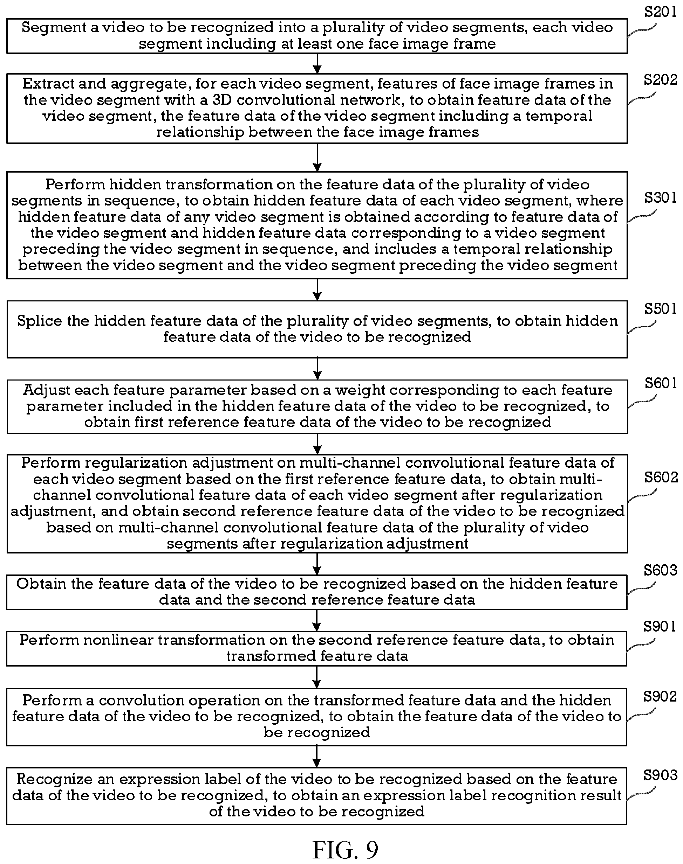

In some embodiments of the present disclosure, another dynamic facial expression recognition method is provided. The dynamic facial expression recognition method may be performed by the server 102. As shown in FIG. 9, the dynamic facial expression recognition method may include S901 to S903, S601 to S603, S501, S301, and S201 to S202.

S901 to S903 are described in detail as follows.

S901: Perform nonlinear transformation on the second reference feature data, to obtain transformed feature data.

In all embodiments of the present disclosure, the nonlinear transformation may refer to performing reversal of the spatial dimension on the second reference feature data, to implement mapping from low-dimensional space to high-dimensional space, or to implement mapping from high-dimensional space to low-dimensional space. It is the opposite of linear transformation. The linear transformation may use matrix multiplication to represent transformation, but the nonlinear transformation cannot use matrix multiplication to represent transformation. The second reference feature data can be better explained through the nonlinear transformation.

In all embodiments of the present disclosure, the nonlinear transformation may include, but is not limited to, power function transformation, logarithmic function transformation, exponential function transformation, arc tangent function transformation, and the like. The exponential function transformation includes, but is not limited to, a Sigmoid function (also referred to as an S-type function).

In all embodiments of the present disclosure, after performing regularization adjustment on the multi-channel convolutional feature data of each video segment, to obtain the multi-channel convolutional feature data of each video segment after regularization adjustment, and obtaining the second reference feature data of the video to be recognized based on the multi-channel convolutional feature data of the plurality of video segments after regularization adjustment, the server may perform nonlinear transformation on the second reference feature data, to obtain the transformed feature data.

In all embodiments of the present disclosure, the process of performing nonlinear transformation on the second reference feature data, to obtain transformed feature data in S901 may include:

performing nonlinear transformation on the second reference feature data through a Sigmoid function, to obtain the transformed feature data.

For example, if the second reference feature data is represented by $\hat{A}$, nonlinear transformation is performed on the second reference feature data through the Sigmoid function, to obtain transformed feature data $Sigmoid(\hat{A})$.

S902: Perform a convolution operation on the transformed feature data and the hidden feature data of the video to be recognized, to obtain the feature data of the video to be recognized.

In all embodiments of the present disclosure, after performing nonlinear transformation on the second reference feature data, to obtain the transformed feature data, the server may perform the convolution operation on the transformed feature data and the hidden feature data, to obtain the feature data of the video to be recognized.

In all embodiments of the present disclosure, the convolution operation may mean that tensor transformation feature data and the hidden feature data are inputted, a convolution kernel is applied to all points of the tensor transformation feature data and the hidden feature data, and a filtering tensor operation is generated by sliding the convolution kernel on the tensor transformation feature data and the hidden feature data, thereby extracting/matching features of the transformed feature data and the hidden feature data.

In all embodiments of the present disclosure, the process of performing a convolution operation on the transformed feature data and the hidden feature data of the video to be recognized, to obtain the feature data of the video to be recognized in S902 may include:

inputting the transformed feature data and the hidden feature data into a one-dimensional convolutional layer; and

performing the convolution operation on the transformed feature data and the hidden feature data through the one-dimensional convolutional layer, to obtain the feature data of the video to be recognized.

For example, still using the foregoing example, if the hidden feature data of the video to be recognized is represented by $X$, and the one-dimensional convolution layer is represented by $Conv1D$, the convolution operation is performed on the transformed feature data $Sigmoid(\hat{A})$ and the hidden feature data $X$ through the one-dimensional convolution layer $Conv1D$, to obtain the feature data $Z$ of the video to be recognized $V$, that is, $Z = Conv1D\,(X \times Sigmoid\,(\hat{A}))$.

S903: Recognize an expression label of the video to be recognized based on the feature data of the video to be recognized, to obtain an expression label recognition result of the video to be recognized.

In all embodiments of the present disclosure, after performing the convolution operation on the transformed feature data and the hidden feature data, to obtain the feature data of the video to be recognized, the server may recognize the expression label of the video to be recognized based on the feature data of the video to be recognized, to obtain the expression label recognition result of the video to be recognized.

For example, still using the foregoing example, the feature data $Z$ of the video to be recognized $V$ is inputted into a fully convolutional layer, and an expression label of the video to be recognized $V$ is recognized through the fully convolutional layer, to obtain an expression label recognition result of the video to be recognized $V$.

For detailed descriptions of S601 to S603 shown in FIG. 9, refer to S601 to S603 shown in FIG. 6. For detailed descriptions of S501 shown in FIG. 9, refer to S501 shown in FIG. 5. For detailed descriptions of S301 shown in FIG. 9, refer to S301 shown in FIG. 3. For detailed descriptions of S201 to S202 shown in FIG. 9, refer to S201 to S202 shown in FIG. 2. Details are not described herein again.

In all embodiments of the present disclosure, the server may perform nonlinear transformation on the second reference feature data, to obtain the transformed feature data, and then perform the convolution operation on the transformed feature data and the hidden feature data, to obtain more accurate feature data of the video to be recognized, leading to more accurate recognition on the expression label of the video to be recognized based on the feature data of the video to be recognized, that is, further improving the accuracy of facial expression recognition.

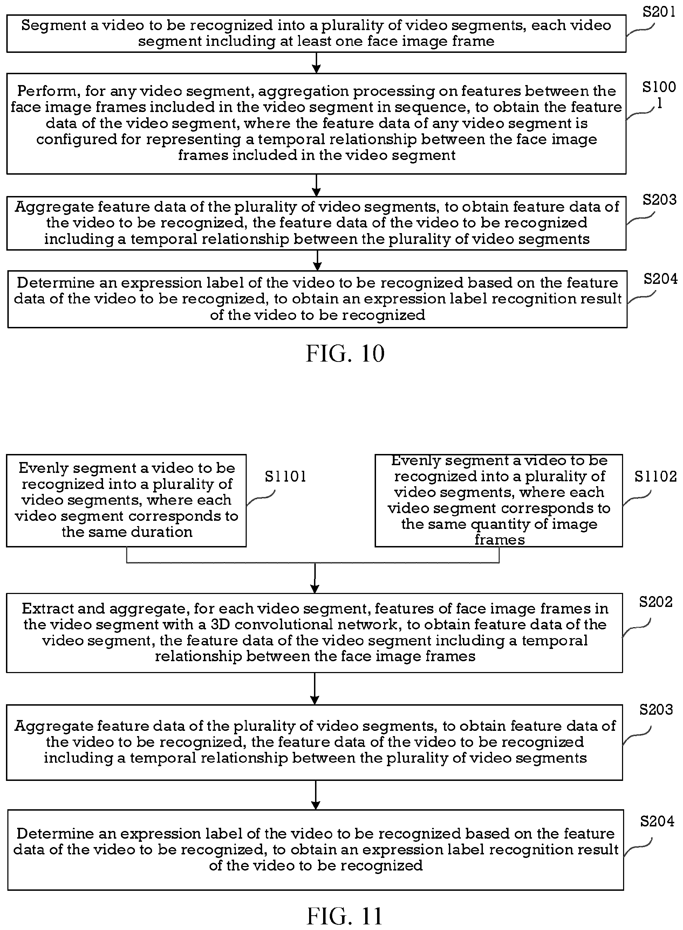

In some embodiments of the present disclosure, another dynamic facial expression recognition method is provided. The dynamic facial expression recognition method may be performed by the server 102. As shown in FIG. 10, the dynamic facial expression recognition method may include S1001, S201, and S203 to S204.

S1001 is described in detail as follows.

S1001: Perform, for any video segment, aggregation processing on features between the face image frames included in the video segment in sequence, to obtain the feature data of the video segment.

The feature data of any video segment is configured for representing a temporal relationship between the face image frames included in the video segment.

In all embodiments of the present disclosure, the sequence may refer to a chronological sequence of the plurality of face image frames. Correspondingly, the temporal relationship may refer to a chronological relationship of the plurality of face image frames.

For example, still using the foregoing example, the video segment $I_1$ is used as an example. The video segment $I_1$ corresponds to 09:00:00-09:00:05. In addition, it is assumed that the video segment $I_1$ includes 300 face image frames. The first to 60th face image frames correspond to 09:00:00-09:00:01, the 61st to 120th face image frames correspond to 09:00:01-09:00:02, the 121st to 180th face image frames correspond to 09:00:02-09:00:03, the 181st to 240th face image frames correspond to 09:00:03-09:00:04, and the 241st to 300th face image frames correspond to 09:00:04-09:00:05. A sequence or temporal relationship between the 300 face image frames is that the first to the 60th face image frames are the face image frames of the first 1 second, the 61st to the 120th face image frames are the adjacent face image frames 1 second after the 60th face image frame, the 121st to the 180th face image frames are the adjacent face image frames 1 second after the 120th face image frame, the 181st to the 240th face image frames are the adjacent face image frames 1 second after the 180th face image frame, and the 241st to the 300th face image frames are the adjacent face image frames 1 second after the 240th face image frame. A sequence and a temporal relationship between face image frames respectively corresponding to the other video segments $I_2$-$I_5$ can be deduced by analogy. Details are not described herein again.

In all embodiments of the present disclosure, any video segment may refer to each of the plurality of video segments.

For example, still using the foregoing example, the video segment $I_1$, the video segment $I_2$, the video segment $I_3$, the video segment $I_4$, and the video segment $I_5$ are any video segment.

In all embodiments of the present disclosure, the process of performing aggregation processing on features between the face image frames included in the video segment in sequence, to obtain the feature data of the video segment in S1001 may include:

extracting three-dimensional feature data of the face image frames included in any video segment in sequence; and

concatenating the extracted three-dimensional feature data, to obtain the feature data of any video segment in sequence.

In an embodiment, the server extracts the three-dimensional feature data of the face image frames included in any video segment in sequence, and concatenates the extracted three-dimensional feature data in sequence, to obtain the feature data of any video segment.

For example, still using the foregoing example, assuming that the video segment $I_1$ is any video segment, three-dimensional feature data $f1$-$f60$ of the first to the 60th face image frames are extracted, then three-dimensional feature data $f60$-$f120$ of the 61st to the 120th face image frames are extracted, then three-dimensional feature data $f121$-$f180$ of the 121st to the 180th face image frames are extracted, then three-dimensional feature data $f181$-$f240$ of the 181st to the 240th face image frames are extracted, and then three-dimensional feature data $f241$-$f300$ of the 241st to 300th face image frames are extracted. Then, concatenation is performed according to an sequence of $f1$-$f60$, $f60$-$f120$, $f121$-$f180$, $f181$-$f240$, and $f241$-$f300$, that is, $(f1$-$f60) + (f61$-$f120) + (f121:f180) + (f181$-$f240) + (f241$-$f300)$, to obtain the feature data of the video segment $I_1$.

Similarly, the process of obtaining feature data respectively corresponding to the other video segments $I_2$-$I_5$ can be deduced by analogy. Details are not described herein again.

By implementing the embodiment, the three-dimensional feature data of the face image frames included in the video segment is extracted in sequence. Since the three-dimensional feature data includes a large amount of information, more accurate feature data of the video segment can be obtained.

In other embodiments, the server may extract two-dimensional feature data of the face image frames included in any video segment in sequence, and then concatenate the extracted two-dimensional feature data in sequence, to obtain the feature data of any video segment. In actual application, a dimension of the extracted feature data may be flexibly adjusted according to a specific application scenario.

By implementing the embodiment, the two-dimensional feature data of the face image frames included in the video segment is concatenated in sequence. Since the two-dimensional feature data includes a small amount of information, the extraction efficiency is higher, and the feature data of the video segment can be quickly obtained.

For detailed descriptions of S201, and S203 to S204 shown in FIG. 10, refer to S201, and S203 to S204 shown in FIG. 2. Details are not described herein again.

In all embodiments of the present disclosure, the server may perform aggregation processing on the features between the face image frames included in the video segment, to capture an association between the face image frames in the video segment. In this way, the obtained feature data of the video segment is more accurate, so that the recognition on the expression label of the video to be recognized is more accurate based on the more accurate feature data of the video to be recognized, thereby improving the accuracy of facial expression recognition.

In some embodiments of the present disclosure, another dynamic facial expression recognition method is provided. The dynamic facial expression recognition method may be performed by the server 102. As shown in FIG. 11, the dynamic facial expression recognition method may include S1101 to S1102, and S202 to S204.

S1101 to S1102 are described in detail as follows.

S1101: Evenly segment a video to be recognized into a plurality of video segments, where each video segment corresponds to the same duration; or

S1102: Evenly segment a video to be recognized into a plurality of video segments, where each video segment corresponds to the same quantity of image frames.

In all embodiments of the present disclosure, the segmenting a video to be recognized, to obtain a plurality of video segments may include the following manners.

Manner 1: Evenly segment a video to be recognized into a plurality of video segments, where each video segment corresponds to the same duration.

For example, the video to be recognized is evenly segmented into five video segments $I_1$-$I_5$, where the video segments $I_1$-$I_5$ respectively correspond to duration of five seconds. In actual application, the duration corresponding to each video segment may be flexibly adjusted according to a specific application scenario.

Manner 2: Evenly segment a video to be recognized into a plurality of video segments, where each video segment corresponds to the same quantity of image frames.

For example, the video to be recognized is evenly segmented into five video segments $I_1$-$I_5$, where a quantity of image frames respectively corresponding to the video segments $I_1$-$I_5$ is 300. In actual application, the quantity of image frames corresponding to each video segment may be flexibly adjusted according to a specific application scenario.

For detailed descriptions of S202 to S204 shown in FIG. 11, refer to S202 to S204 shown in FIG. 2. Details are not described herein again.

In all embodiments of the present disclosure, the server may evenly segment the video to be recognized into the plurality of video segments, to provide strong support for subsequent aggregation processing on the features between the face image frames included in the video segment. In addition, the process is simple, easy to implement, and applicable to a wide range of application scenarios.

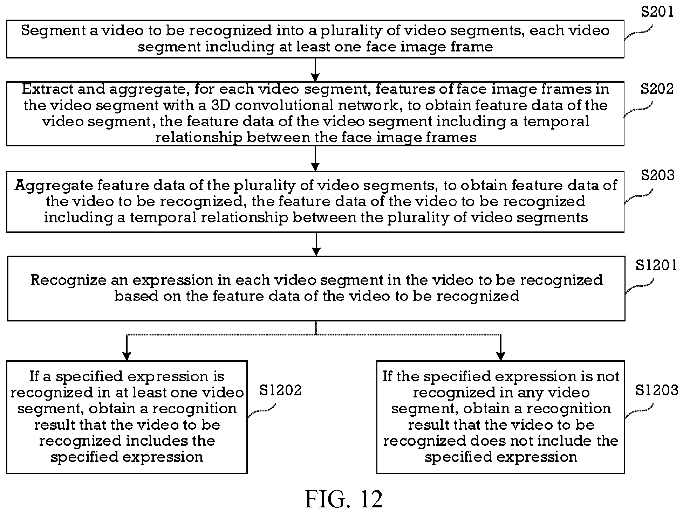

In some embodiments of the present disclosure, another dynamic facial expression recognition method is provided. The dynamic facial expression recognition method may be performed by the server 102. As shown in FIG. 12, the dynamic facial expression recognition method may include S1201 to S1203, and S201 to S203.

S1201 to S1203 are described in detail as follows.

S1201: Recognize an expression in each video segment in the video to be recognized based on the feature data of the video to be recognized.

S1202: If a specified expression is recognized in at least one video segment, a recognition result is that the video to be recognized includes the specified expression.

S1203: If the specified expression is not recognized in any video segments, obtain a recognition result that the video to be recognized does not include the specified expression.

In all embodiments of the present disclosure, the server may recognize the expression in each video segment in the video to be recognized based on the feature data of the video to be recognized using a multi-instance learning mechanism. The multi-instance learning refers to a method that evolves from a supervised learning algorithm, and a "packet" is defined as a set of a plurality of instances. If at least one instance in the packet is positive, the packet may be labeled as positive, and if all instances in the packet are negative, the packet may be labeled as negative. For example, the video to be recognized in this embodiment of the present disclosure may be considered as a packet, and each video segment in the video to be recognized may be considered as an instance.

In all embodiment of the present disclosure, the recognizing the expression in each video segment in the video to be recognized based on the feature data of the video to be recognized using a multi-instance learning mechanism may include the following cases.

Case 1: If a specified expression is recognized in at least one video segment, a recognition result that the video to be recognized includes the specified expression is obtained.

For example, still using the foregoing example, assuming that the specified expression is a joy expression, only when the joy expression is recognized in at least one of the video segments $I_1$-$I_5$ based on the feature data of the video to be recognized, a recognition result that the video to be recognized includes the joy expression is obtained. In this case, the video to be recognized is a positive packet.

Case 2: If the specified expression is not recognized in any video segment, a recognition result that the video to be recognized does not include the specified expression is obtained.

For example, still using the foregoing example, assuming that the specified expression is a joy expression, only when the pleasant expression is not recognized in any of the video segments $I_1$-$I_5$ based on the feature data of the video to be recognized, a recognition result that the video to be recognized does not include the specified expression is obtained. In this case, the video to be recognized is a negative packet.

For detailed descriptions of S201 to S203 shown in FIG. 12, refer to S201 to S203 shown in FIG. 2. Details are not described herein again.

In all embodiments of the present disclosure, the server can more accurately recognize the expression label of the video to be recognized based on the feature data of the video to be recognized using the multi-instance learning mechanism, to obtain the expression label recognition result of the video to be recognized, thereby improving the accuracy of facial expression recognition.

A specific scenario of this embodiment of the present disclosure is described in detail below.

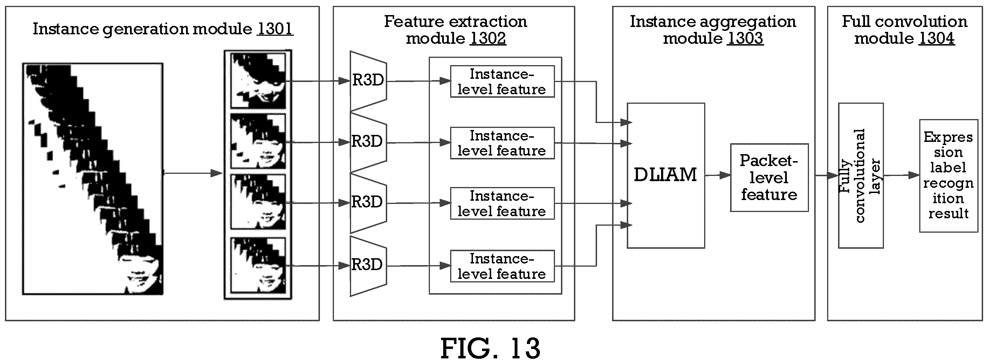

Referring to FIG. 13, an instance generation module 1301, a feature extraction module 1302, an instance aggregation module 1303, and a full convolution module 1304 are mainly included.

The instance generation module 1301 is mainly configured to segment a video to be recognized, to obtain a plurality of instances (that is, the video segments in the foregoing embodiments).

For example, the video to be recognized is represented by $V$, and the video to be recognized $V$ includes $T$ image frames and may be segmented into $N$ instances, where all instances $I = [I_1, I_2, ..., \text{and } I_N]$, where $I_n \in R^{3*T*H*W}$, $I_n$ is any one of $[I_1, I_2, ..., \text{and } I_N]$, 3 is three colors: red, green, and blue, $T$ is a quantity of image frames (that is, the $T$ image frames), $H$ is a height of an image frame, and $W$ is a width of an image frame.

The feature extraction module 1302 is mainly configured to extract and aggregate features of face image frames included in each instance, to obtain an instance-level feature of each instance (that is, the feature data of each video segment in the foregoing embodiments).

For example, for each instance, feature extraction and aggregation are performed on face image frames included in the instance using a 3D residual convolutional neural network (R3D). During aggregation, three-dimensional feature data of the face image frames included in the instance is obtained based on a temporal relationship between the face image frames included in the instance.

For example, still using the foregoing example, three-dimensional feature data $F_n$ of the instance $I_n$ is extracted through *R3D,* that is:

$$F_n = R3D(I_n)$$

where $F_n$ is the three-dimensional feature data of the instance $I_n$.

Three-dimensional feature data $F_n$ of a plurality of instances $I_n$ forms three-dimensional feature data $F$ of the video to be recognized $V$, where $F \in R^{N \times C}$, $N$ is a quantity of instances (that is, $N$ instances), and $C$ is a quantity of channels of an output feature.

In this way, strong modeling is performed on a short-term temporal relationship in a dynamic expression, so that a single image frame that looks abnormal can be recognized as a part of a facial movement, and an unchanged expression/emotion is recognized when the facial movement exists, for example, an object speaks, thereby avoiding interference of the facial movement to facial expression recognition, and improving the accuracy of facial expression recognition.

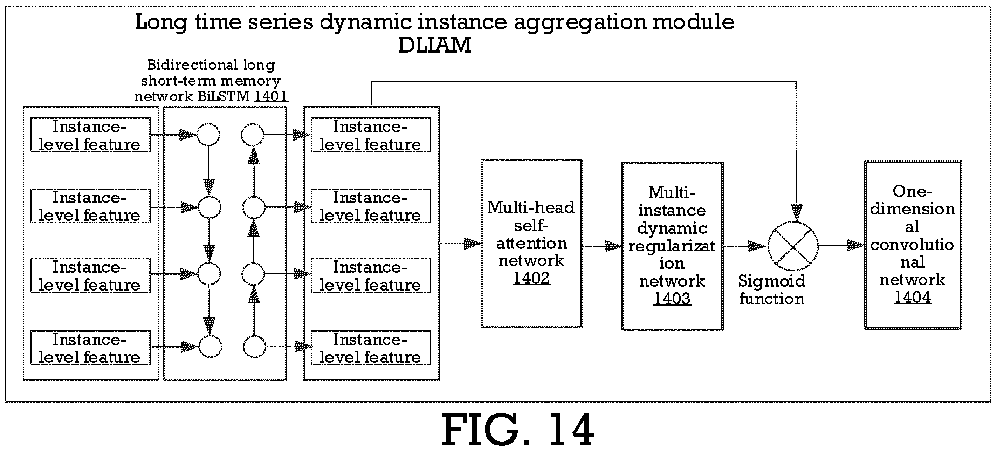

The instance aggregation module 1303 is mainly configured to aggregate instance-level features of a plurality of instances, to obtain packet-level feature data of the video to be recognized (that is, the feature data of the video to be recognized in the foregoing embodiments). DLIAM shown in FIG. 14 refers to a long temporal dynamic instance aggregation module.

For example, FIG. 14 is a schematic diagram of a long temporal dynamic instance aggregation module. The long temporal dynamic instance aggregation module mainly includes a bidirectional long short-term memory (BiLSTM) network 1401, a multi-head self-attention (MHSA) network 1402, a multi-instance dynamic regularization network 1403, and a one-dimensional convolutional network 1404.

The BiLSTM 1401 is formed by combining a forward LSTM and a backward LSTM, and is mainly configured to perform iterative hidden transformation on instance-level features of each instance, to obtain hidden feature data of each instance.

For example, still using the foregoing example, hidden feature data $X_n$ of the instance $I_n$ is obtained through BiLSTM, that is:

$$X_n, H_n = BiLSTM(F_n, H_{n-1})$$

where $H_n$ is an $n$th hidden state of *BiLSTM, $H_{n-1}$* is an $(n-1)$th hidden state of *BiLSTM, $X_n$* is the hidden feature data of the instance $I_n$, and $X_{n-1}$ is hidden feature data of an instance $I_{n-1}$.

Hidden feature data $X_n$ of a plurality of instances $I_n$ forms the hidden feature data $X$ of the video to be recognized $V$.

The multi-head self-attention network 1402 is mainly configured to perform weight adjustment on each feature parameter included in the hidden feature data of the video to be recognized, to obtain a first reference feature matrix of the video to be recognized.

For example, still using the foregoing example, the multi-head self-attention network performs weight adjustment on each feature parameter included in the hidden feature data $X$ of the video to be recognized $V$, to obtain a first reference feature matrix $A$ of the video to be recognized $V$, that is:

$$A = MHSA(X)$$

where $A$ is the first reference feature matrix of the video to be recognized $V$, and $A \in R^{N \times C}$.

The multi-instance dynamic regularization network 1403 is mainly configured to perform regularization adjustment on the multi-channel convolutional feature data of each instance based on the first reference feature matrix, to obtain multi-channel convolutional feature data after regularization adjustment on each instance, and obtain a second reference feature matrix of the video to be recognized based on the multi-channel convolutional feature data after regularization adjustment on a plurality of instances.

For example, still using the foregoing example, regularization adjustment is performed on convolutional feature data of a $c$th channel of the instance $I_n$ based on the first reference feature matrix $A$, to obtain convolutional feature data $\hat{A}_{nc}$

of the $c^{th}$ channel after regularization adjustment on the instance $I_n$, that is:

$$\hat{A}_{nc} = \frac{A_{nc} - \sum_{k \in K} w_k \mu_k}{\sqrt{\sum_{k \in K} w_k' \sigma_k^2 + \epsilon}} * \gamma + \beta$$

where $\hat{A}_{nc}$ is the convolutional feature data of the $c^{th}$ channel after regularization adjustment on the instance $I_n$; and $A_{nc}$ is the convolutional feature data of the $c^{th}$ channel before regularization adjustment on the instance $I_n$.

$k$ is a regularizer, $\mathcal{K} = bn, in, bn$ is a packet-level regularizer, and in is an instance-level regularizer; $\mu_k$ is a mean of channel values of the instance calculated by the regularizer $k$, and $\sigma_k$ is a variance of the channel values of the instance calculated by the regularizer $k$; and $w_k$ and $w_k'$ are weights of the regularizer $k$.

$\varepsilon$ is an extremely decimal number to ensure mathematical stability; and $\gamma$ and $\beta$ are learnable transform parameters.

For example,

$$\mu_{bn} = \frac{1}{NC} \sum_{n,c}^{N,C} A_{nc}, \sigma_{bn} = \frac{1}{NC} \sum_{n,c}^{N,C} (A_{nc} - \mu_{bn})^2$$

where $\mu_{in}, \sigma_{in} \in R^1$.

For example,

$$\mu_{in} = \frac{1}{N} \sum_{n}^{N} A_{nc}, \sigma_{in} = \frac{1}{N} \sum_{n}^{N} (A_{nc} - \mu_{in})^2$$

where $\mu_{in}, \sigma_{in}, \in R^1$.

For example,

$$\sum_{k \in K} w_k = 1, \sum_{k \in K} w'_k = 1$$

$$w_k = \frac{e^{\lambda_k}}{\sum_{j \in \mathcal{K}} e^{\lambda_j}}$$

where $\lambda$ is a learnable parameter.

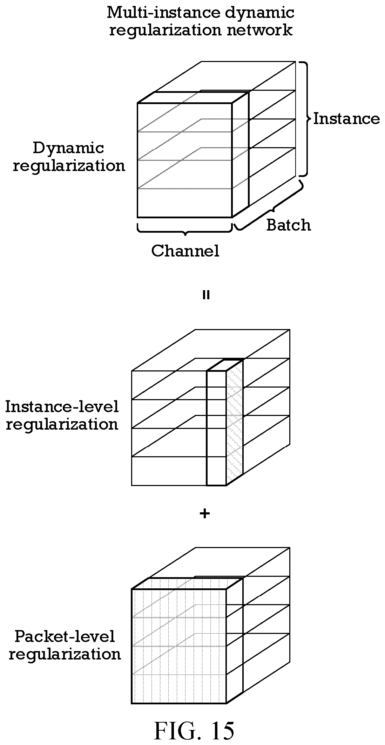

For example, FIG. 15 is a schematic diagram of an exemplary multi-instance dynamic regularization network. As shown in FIG. 15, regularization processing is performed through both the packet-level regularizer and the instance-level regularizer, to obtain a final regularization processing result. In FIG. 15, channel represents a channel, batch represents a batch (that is, a data volume used in one iteration), and instances represents instances. In actual application, regularization processing may be flexibly adjusted according to a specific application scenario. For example, regularization processing may be packet-level regularization processing through the packet-level regularizer only or instance-level regularization processing through the instance-level regularizer only.

The multi-channel convolutional feature data $\hat{A}_{nc}$ obtained after regularization adjustment on the plurality of instances $I_n$ forms the second reference feature matrix $\hat{A}$ of the video to be recognized $V$.

The one-dimensional convolutional network 1404 is mainly configured to perform nonlinear transformation on the second reference feature matrix, to obtain transformed feature data, and perform a convolution operation on the transformed feature data and a hidden feature matrix, to obtain feature data of the video to be recognized.

For example, still using the foregoing example, a one-dimensional convolutional network $Conv1D$ uses the $Sigmoid$ algorithm, and performs nonlinear transformation on the second reference feature matrix $A$ using the $Sigmoid$ algorithm, to obtain the transformed feature data, that is:
$Sigmoid(\hat{A})$

Further, the convolution operation is performed on transformed feature data *Sigmoid*(*Â*) and hidden feature matrix *X,* to obtain feature data *Z* of the video to be recognized *V*, that is:

$$Z = Conv1D\left(X \times Sigmoid\left(\hat{A}\right)\right)$$

In this way, strong modeling is performed on a long-term temporal relationship in a dynamic expression, to establish an association between instances, thereby further avoiding interference to facial expression recognition and improving the accuracy of facial expression recognition.

The full convolution module 1304 is mainly configured to determine an expression label of the video to be recognized based on the packet-level feature data of the video to be recognized, to obtain an expression label recognition result of the video to be recognized.

For example, still using the foregoing example, the feature data *Z* of the video to be recognized *V* is inputted into a fully convolutional layer, and an expression label of the video to be recognized *V* is recognized through the fully convolutional layer, to obtain an expression label recognition result of the video to be recognized *V*.

The specific formulas shown in FIG. 13 to FIG. 15 may be flexibly adjusted according to a specific application scenario, for example, a corresponding parameter is increased or decreased. In addition, refer to the foregoing embodiment for detailed descriptions of FIG. 13 to FIG. 15. Details are not described herein again.

In all embodiments of the present disclosure, the server may establish a short-term temporal association between the face image frames and a long-term temporal association between the video segments by starting from both the fine granularity dimension of the face image frame and the coarse granularity dimension of the video segment, thereby reducing the negative impact of weak supervision on facial expression recognition, and improving the accuracy of facial expression recognition.

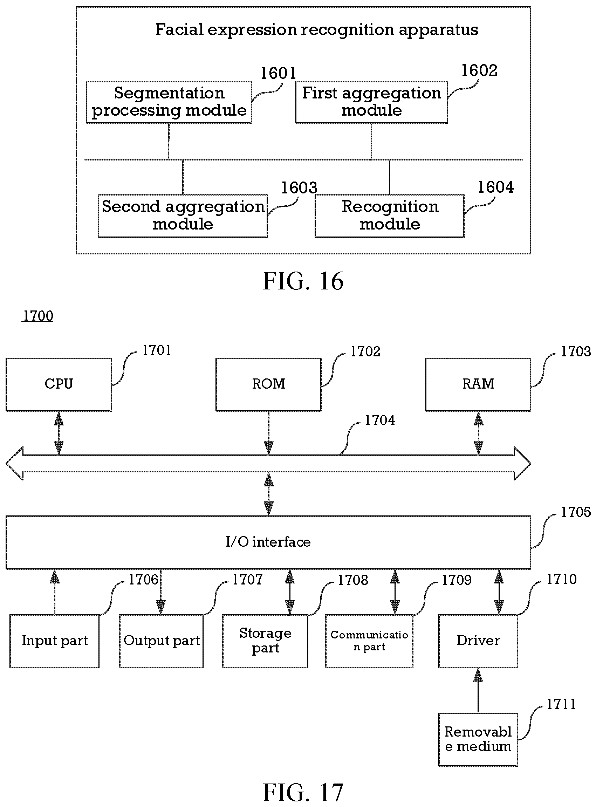

FIG. 16 is a block diagram of a dynamic facial expression recognition apparatus according to some embodiments of the present disclosure. As shown in FIG. 16, the dynamic facial expression recognition apparatus includes:

a segmentation processing module 1601, configured to segment a video to be recognized into a plurality of video segments, each video segment including at least one face image frame;

a first aggregation module 1602, configured to: extract and aggregate, for each video segment, features of face image frames in the video segment using a 3D convolutional network, to obtain feature data of the video segment, the feature data of the video segment including a temporal relationship between the face image frames;

a second aggregation module 1603, configured to aggregate feature data of the plurality of video segments, to obtain feature data of the video to be recognized, the feature data of the video to be recognized including a temporal relationship between the plurality of video segments; and

a recognition module 1604, configured to determine an expression label of the video to be recognized based on the feature data of the video to be recognized, to obtain an expression label recognition result of the video to be recognized.

The apparatus provided in the foregoing embodiments and the method provided in the foregoing embodiments belong to the same idea, and specific manners of performing operations by the modules and units have been described in detail in the method embodiments.

An embodiment of the present disclosure further provides an electronic device. The electronic device includes: one or more processors; and a memory, configured to store one or more programs, the one or more programs, when executed by the one or more processors, causing the electronic device to implement the foregoing dynamic facial expression recognition method.

FIG. 17 is a schematic structural diagram of a computer system of an electronic device suitable for implementing the embodiments of the present disclosure. A computer system 1700 of the electronic device shown in FIG. 17 is merely an example, and is not to bring any limitation to the function and use range of the embodiments of the present disclosure.

As shown in FIG. 17, the computer system 1700 includes a central processing unit (CPU) 1701, which may perform various suitable actions and processing according to a program stored in a read-only memory (ROM) 1702 or a program loaded from a storage portion 1708 to a random access memory (RAM) 1703, for example, perform the methods in the foregoing embodiments. The RAM 1703 further has various programs and data required by system operations stored therein. The CPU 1701, the ROM 1702, and the RAM 1703 are connected to each other using a bus 1704. An input/output (I/O) interface 1705 is also connected to the bus 1704.

The following components are connected to the I/O interface 1705: an input portion 1706 including a keyboard, a mouse, and the like; an output portion 1707 including a cathode ray tube (CRT), a liquid crystal display (LCD), a speaker, and the like; a storage portion 1708 including a hard disk, and the like; and a communication portion 1709 of a network interface card including a local area network (LAN) card, a modem, and the like. The communication portion 1709 performs communication processing using a network such as the Internet. A driver 1710 is also connected to the I/O interface 1705 according to requirements. A removable medium 1711, such as a magnetic disk, an optical disc, a magneto-optical disk, or a semiconductor memory, is installed on the driver 1710 according to requirements, so that a computer program read from the removable medium 1711 is installed into the storage portion 1708 according to requirements.

Particularly, according to an embodiment of the present disclosure, the processes described in the foregoing by referring to the flowcharts may be implemented as computer software programs. For example, an embodiment of the present disclosure includes a computer program product, including a computer program carried in a computer readable medium. The computer program includes a computer program configured for performing the methods shown in the flowcharts. In such an embodiment, the computer program may be downloaded and installed from a network and/or installed from the removable medium 1711 through the communication portion 1709. When the computer program is executed by the central processing unit (CPU) 1701, various functions defined in the system of the present disclosure are performed.

The computer-readable medium shown in the embodiments of the present disclosure may be a computer-readable signal medium, a computer-readable storage medium, or any combination thereof. The computer-readable medium may be, for example, an electronic, magnetic, optical, electromagnetic, infrared, or semiconductor system, apparatus, or device, or a combination of any of the foregoing. More specific examples of the computer-readable medium may include but are not limited to: an electrical connection having one or more wires, a portable computer diskette, a hard disk, a random access memory (RAM), a read-only memory (ROM), an erasable programmable read only memory (EPROM), a flash memory, an optical fiber, a portable compact disc read-only memory (CD-ROM), an optical storage device, a magnetic storage device, or any suitable combination thereof. In the present disclosure, the computer-readable medium may be any tangible medium that includes or stores a program, and the program may be used by an instruction execution system, apparatus, or device or may be used in combination with the instruction execution system, apparatus, or device. In the present disclosure, the computer-readable signal medium may include a data signal propagated in a baseband or as a part of a carrier, and carries a computer-readable computer program. The propagated data signal may be in a plurality of forms, including, but not limited to, an electromagnetic signal, an optical signal, or any appropriate combination thereof. The computer-readable signal medium may be further any computer-readable medium in addition to a computer-readable storage medium. The computer-readable medium may send, propagate, or transmit a program that is used by or used in combination with an instruction execution system, apparatus, or device. The computer program included in the computer-readable medium may be transmitted using any suitable medium, including but not limited to: a wireless medium, a wire medium, and the like, or any suitable combination thereof.

The flowcharts and block diagrams in the accompanying drawings illustrate possible system architectures, functions, and operations that may be implemented by a system, a method, and a computer program product according to various embodiments of the present disclosure. Each box in a flowchart or a block diagram may represent a module, a program segment, or a part of code. The module, the program segment, or the part of code includes one or more executable instructions configured for implementing designated logic functions. In some implementations used as substitutes, functions annotated in blocks may occur in a sequence different from that annotated in an accompanying drawing. For example, actually two blocks shown in succession may be performed basically in parallel, and sometimes the two blocks may be performed in a reverse sequence. This is determined by a related function. Each block in the block diagram or the flowchart, and a combination of blocks in the block diagram or the flowchart may be implemented using a dedicated hardware-based system that performs a specified function or operation, or may be implemented using a combination of dedicated hardware and computer instructions.

Related units described in the embodiments of the present disclosure may be implemented in a software manner, or may be implemented in a hardware manner, and the unit described can also be set in a processor. Names of these units do not constitute a limitation on the units in a case.

Another aspect of the present disclosure further provides a computer-readable medium. The computer-readable medium has a computer program stored therein, the computer program, when executed by a processor, causing the foregoing dynamic facial expression recognition method to be implemented. The computer-readable medium may be included in the electronic device described in the foregoing embodiment, or may exist alone and is not assembled into the electronic device.

Another aspect of the present disclosure further provides a computer program product or a computer program. The computer program product or the computer program includes computer-executable instructions. The computer-executable instructions are stored in a computer-readable storage medium. A processor of the computer device reads the computer instructions from the computer-readable medium. The processor executes the computer instructions, so that the computer device performs the dynamic facial expression recognition method provided in the foregoing embodiments.

The foregoing descriptions are merely preferred exemplary embodiments of the present disclosure, and are not intended to limit implementations of the present disclosure. A person of ordinary skill in the art can make corresponding variations or modifications conveniently according to the main idea of the present disclosure. Therefore, the protection scope of the present disclosure is subject to the protection scope required by the claims.

**Claims**

1. A video expression label determining method, performed by a computer device, the method comprising:

   segmenting a video into a plurality of video segments, each video segment comprising at least two face image frames;
   extracting a feature from each face image frame of the respective video segment using a 3D convolutional network and aggregating the feature of the each face image frame using the 3D convolutional network, to obtain first feature data of the respective video segment;
   aggregating the first feature data of the plurality of video segments, to obtain second feature data of the video; and
   determining an expression label of the video based on the second feature data.

2. The method according to claim 1, wherein the aggregating the first feature data of the plurality of video segments, to obtain the second feature data of the video comprises:

   obtaining, hidden feature data of each video segment according to the first feature data of the video segment and hidden feature data of a video segment preceding the video segment in sequence, wherein the hidden feature data of each video segment represents a temporal relationship between the video segment and the video segment preceding the video segment; and
   aggregating hidden feature data of the plurality of video segments, to obtain the second feature data of the video.

3. The method according to claim 2, wherein the obtaining the hidden feature data of each video segment comprises:

   sequentially inputting the first feature data of the plurality of video segments into a recurrent neural network; and
   for each video segment, performing iterative hidden transformation on the first feature data of the video segment using the recurrent neural network and based on the hidden feature data of the video segment preceding the video segment in sequence, to obtain the hidden feature data of the video segment.

4. The method according to claim 2, wherein the aggregating the hidden feature data of the plurality of video segments, to obtain the second feature data of the video comprises:

   concatenating the hidden feature data of the plurality of video segments, to obtain hidden feature data of the video; and
   adjusting weights of feature parameters in the hidden feature data of the video based on a preset weight adjustment mechanism, to obtain the second feature data of the video to be recognized.

5. The method according to claim 4, wherein the adjusting the weights of the feature parameters in the hidden feature data of the video based on the preset weight adjustment mechanism, to obtain the second feature data of the video to be recognized comprises:

   adjusting the feature parameters comprised in the hidden feature data of the video based on preset weights using a multi-head self-attention network, to obtain first reference feature data of the video;
   obtaining multi-channel convolutional feature data of each video segment;
   adjusting the multi-channel convolutional feature data of each video segment based on the first reference feature data using a multi-instance dynamic regularization network, to obtain adjusted multi-channel convolutional feature data of each video segment;
   obtaining second reference feature data of the video by aggregating the adjusted multi-channel convolutional feature data of the plurality of video segments; and
   obtaining the second feature data based on the hidden feature data of the video and the second reference feature data of the video using a one-dimensional convolutional network.

6. The method according to claim 5, wherein each feature parameter is assigned with a preset weight; the adjusting the feature parameters comprised in the hidden feature data of the video based on preset weights, to obtain the first reference feature data of the video comprises:

> multiplying each feature parameter with its preset weight, to obtain an operation result corresponding to each feature parameter; and
> replacing each feature parameter with its operation result, to obtain the first reference feature data of the video.

**7.** The method according to claim 5, wherein the multi-instance dynamic regularization network comprises a packet-level regularizer corresponding to the video and an instance-level regularizer corresponding to each video segment, wherein the packet-level regularizer is configured to calculate a mean and a variance of the multi-channel convolutional feature data corresponding to the video segments comprised in the video, and the instance-level regularizer is configured to calculate a mean and a variance of multi-channel convolutional feature data of the video segment corresponding to the instance-level regularizer; and
the adjusting the multi-channel convolutional feature data of each video segment based on the first reference feature data, to obtain the adjusted multi-channel convolutional feature data of each video segment comprises:
performing, for each channel of each video segment, regularization adjustment on channel convolutional feature data of the channel based on the first reference feature data, the mean and the variance calculated by the packet-level regularizer, and the mean and the variance calculated by the instance-level regularizer corresponding to the video segment, to obtain the adjusted multi-channel convolutional feature data of the video segment.

**8.** The method according to claim 7, wherein the performing regularization adjustment on channel convolutional feature data of the channel based on the first reference feature data, the mean and the variance calculated by the packet-level regularizer, and the mean and the variance calculated by the instance-level regularizer corresponding to the video segment comprises:

> obtaining a weight of the packet-level regularizer and a weight of the instance-level regularizer corresponding to the video segment; and
> performing regularization adjustment on the channel convolutional feature data of the channel based on the first reference feature data, the weight of the packet-level regularizer, the mean and the variance calculated by the packet-level regularizer, the weight of the instance-level regularizer, and the mean and the variance calculated by the instance-level regularizer.

**9.** The method according to claim 5, wherein the obtaining the second feature data of the video based on the hidden feature data and the second reference feature data of the video comprises:

> performing nonlinear transformation on the second reference feature data using the one-dimensional convolutional network, to obtain transformed feature data; and
> performing a convolution operation on the transformed feature data and the hidden feature data of the video using the one-dimensional convolutional network, to obtain the second feature data of the video.

**10.** The method according to claim 1, wherein the extracting the feature of each face image frame of the respective video segment using the 3D convolutional network and aggregating the feature of the each face image frame using the 3D convolutional network, to obtain the first feature data of the respective video segment comprises:

> sequentially inputting each face image frame comprised in the respective video segment into the 3D convolutional network; and
> extracting the feature of each face image frame of the respective video segment using the 3D convolutional network and aggregating the feature of the each face image frame using the 3D convolutional network, to obtain the first feature data of the respective video segment.

**11.** The method according to claim 10, wherein the extracting the feature of each face image frames of the respective video segment using the 3D convolutional network and aggregating the feature of the each face image frame using the 3D convolutional network comprises:

> sequentially extracting three-dimensional feature data of each face image frame in the respective video segment; and
> concatenating the extracted three-dimensional feature data in sequence, to obtain the first feature data of the respective video segment.

12. The method according to any one of claims 1 to 11, wherein the at least two face image frames correspond to a continuous facial movement.

13. The method according to any one of claims 1 to 11, wherein the determining the expression label of the video based on the second feature data, to obtain an expression label recognition result of the video to be recognized comprises:

recognizing an expression in each video segment in the video based on the second feature data; and
if a specified expression is recognized in at least one video segment, obtaining a recognition result that the video comprises the specified expression; or
if the specified expression is not recognized in any video segment, obtaining a recognition result that the video does not comprise the specified expression.

14. A video expression label determining apparatus, comprising:

a segmentation processing module, configured to segment a video to be recognized into a plurality of video segments, each video segment comprising at least two face image frames;
a first aggregation module, configured to: extract a feature of each face image frame of the respective video segment using a 3D convolutional network and aggregate the feature of the each face image frames using the 3D convolutional network, to obtain first feature data of the video segment;
a second aggregation module, configured to aggregate first feature data of the plurality of video segments, to obtain second feature data of the video; and
a recognition module, configured to determine an expression label of the video based on the second feature data.

15. An electronic device, comprising:

one or more processors; and
a memory, configured to store one or more programs, the one or more programs, when executed by the electronic device, causing the electronic device to implement the video expression label determining method according to any one of claims 1 to 13.

16. A computer-readable medium, having a computer program stored therein, the computer program, when executed by a processor, causing the video expression label determining method according to any one of claims 1 to 13 to be implemented.

17. A computer program product, comprising computer instructions, when the computer instructions being executed by a processor, causing the video expression label determining method according to any one of claims 1 to 13 to be implemented.

101    102

FIG. 1

Segment a video to be recognized into a plurality of video segments, each video segment including at least one face image frame

S201

Extract and aggregate, for each video segment, features of face image frames in the video segment with a 3D convolutional network, to obtain feature data of the video segment, the feature data of the video segment including a temporal relationship between the face image frames

S202

Aggregate target feature data of the plurality of video segments, to obtain feature data of the video to be recognized, the target feature data of the video to be recognized including a temporal relationship between the plurality of video segments

S203

Determine an expression label of the video to be recognized based on the feature data of the video to be recognized, to obtain an expression label recognition result of the video to be recognized

S204

FIG. 2

Segment a video to be recognized into a plurality of video segments, each video segment including at least one face image frame — S201

Extract and aggregate, for each video segment, features of face image frames in the video segment with a 3D convolutional network, to obtain feature data of the video segment, the feature data of the video segment including a temporal relationship between the face image frames — S202

Perform hidden transformation on the feature data of the plurality of video segments in sequence, to obtain hidden feature data of each video segment, where hidden feature data of any video segment is obtained according to feature data of the video segment and hidden feature data corresponding to a video segment preceding the video segment in sequence, and includes a temporal relationship between the video segment and the video segment preceding the video segment — S301

Aggregate hidden feature data of the plurality of video segments, to obtain the feature data of the video to be recognized — S302

Determine an expression label of the video to be recognized based on the feature data of the video to be recognized, to obtain an expression label recognition result of the video to be recognized — S204

FIG. 3

Segment a video to be recognized into a plurality of video segments, each video segment including at least one face image frame — S201

Extract and aggregate, for each video segment, features of face image frames in the video segment with a 3D convolutional network, to obtain feature data of the video segment, the feature data of the video segment including a temporal relationship between the face image frames — S202

Sequentially input the feature data of the plurality of video segments into a recurrent neural network in sequence — S401

Perform, for any video segment, iterative hidden transformation on feature data of the video segment based on hidden feature data corresponding to a video segment preceding the video segment in sequence by using the recurrent neural network, to obtain hidden feature data of the video segment — S402

Aggregate hidden feature data of the plurality of video segments, to obtain the feature data of the video to be recognized — S302

Determine an expression label of the video to be recognized based on the feature data of the video to be recognized, to obtain an expression label recognition result of the video to be recognized — S204

FIG. 4

S201

Segment a video to be recognized into a plurality of video segments, each video segment including at least one face image frame

S202

Extract and aggregate, for each video segment, features of face image frames in the video segment with a 3D convolutional network, to obtain feature data of the video segment, the feature data of the video segment including a temporal relationship between the face image frames

S301

Perform hidden transformation on the feature data of the plurality of video segments in sequence, to obtain hidden feature data of each video segment, where hidden feature data of any video segment is obtained according to feature data of the video segment and hidden feature data corresponding to a video segment preceding the video segment in sequence, and includes a temporal relationship between the video segment and the video segment preceding the video segment

S501

Concatenate the hidden feature data of the plurality of video segments, to obtain hidden feature data of the video to be recognized

S502

Perform weight adjustment on the hidden feature data of the video to be recognized based on a preset weight adjustment mechanism, to obtain the feature data of the video to be recognized

S204

Determine an expression label of the video to be recognized based on the feature data of the video to be recognized, to obtain an expression label recognition result of the video to be recognized

FIG. 5

Segment a video to be recognized into a plurality of video segments, each video segment including at least one face image frame

S201

Extract and aggregate, for each video segment, features of face image frames in the video segment with a 3D convolutional network, to obtain feature data of the video segment, the feature data of the video segment including a temporal relationship between the face image frames

S202

Perform hidden transformation on the feature data of the plurality of video segments in sequence, to obtain hidden feature data of each video segment, where hidden feature data of any video segment is obtained according to feature data of the video segment and hidden feature data corresponding to a video segment preceding the video segment in sequence, and includes a temporal relationship between the video segment and the video segment preceding the video segment

S301

Splice the hidden feature data of the plurality of video segments, to obtain hidden feature data of the video to be recognized

S501

Adjust each feature parameter based on a weight corresponding to each feature parameter included in the hidden feature data of the video to be recognized, to obtain first reference feature data of the video to be recognized

S601

Perform regularization adjustment on multi-channel convolutional feature data of each video segment based on the first reference feature data, to obtain multi-channel convolutional feature data of each video segment after regularization adjustment, and obtain second reference feature data of the video to be recognized based on multi-channel convolutional feature data of the plurality of video segments after regularization adjustment

S602

Obtain the feature data of the video to be recognized based on the hidden feature data and the second reference feature data

S603

Determine an expression label of the video to be recognized based on the feature data of the video to be recognized, to obtain an expression label recognition result of the video to be recognized

S204

FIG. 6

Segment a video to be recognized into a plurality of video segments, each video segment including at least one face image frame ⌐S201

↓

Extract and aggregate, for each video segment, features of face image frames in the video segment with a 3D convolutional network, to obtain feature data of the video segment, the feature data of the video segment including a temporal relationship between the face image frames ⌐S202

↓

Perform hidden transformation on the feature data of the plurality of video segments in sequence, to obtain hidden feature data of each video segment, where hidden feature data of any video segment is obtained according to feature data of the video segment and hidden feature data corresponding to a video segment preceding the video segment in sequence, and includes a temporal relationship between the video segment and the video segment preceding the video segment ⌐S301

↓

Concatenate the hidden feature data of the plurality of video segments, to obtain hidden feature data of the video to be recognized ⌐S501

↓

Respectively assign a weight to each feature parameter included in the hidden feature data of the video to be recognized ⌐S701

↓

Perform a multiplication operation on each feature parameter and the weight corresponding to each feature parameter, to obtain an operation result corresponding to each feature parameter ⌐S702

↓

Replace each feature parameter with the operation result corresponding to each feature parameter, to obtain the first reference feature data of the video to be recognized ⌐S703

↓

Perform regularization adjustment on multi-channel convolutional feature data of each video segment based on the first reference feature data, to obtain multi-channel convolutional feature data of each video segment after regularization adjustment, and obtain second reference feature data of the video to be recognized based on multi-channel convolutional feature data of the plurality of video segments after regularization adjustment ⌐S602

↓

Obtain the feature data of the video to be recognized based on the hidden feature data and the second reference feature data ⌐S603

↓

Determine an expression label of the video to be recognized based on the feature data of the video to be recognized, to obtain an expression label recognition result of the video to be recognized ⌐S204

FIG. 7

S201
Segment a video to be recognized into a plurality of video segments, each video segment including at least one face image frame

S202
Extract and aggregate, for each video segment, features of face image frames in the video segment by using a 3D convolutional network, to obtain feature data of the video segment, the feature data of the video segment including a temporal relationship between the face image frames

S301
Perform hidden transformation on the feature data of the plurality of video segments in sequence, to obtain hidden feature data of each video segment, where hidden feature data of any video segment is obtained according to feature data of the video segment and hidden feature data corresponding to a video segment preceding the video segment in sequence, and includes a temporal relationship between the video segment and the video segment preceding the video segment

S501
Splice the hidden feature data of the plurality of video segments, to obtain hidden feature data of the video to be recognized

S601
Adjust each feature parameter based on a weight corresponding to each feature parameter included in the hidden feature data of the video to be recognized, to obtain first reference feature data of the video to be recognized

S801
Perform, for any channel of each video segment, regularization adjustment on channel convolutional feature data of the channel based on the first reference feature data, the mean and the variance that are calculated by the packet-level regularizer, and the mean and the variance that are calculated by the instance-level regularizer corresponding to the video segment, to obtain the multi-channel convolutional feature data of the video segment after regularization adjustment

S603
Obtain the feature data of the video to be recognized based on the hidden feature data and the second reference feature data

S204
Determine an expression label of the video to be recognized based on the feature data of the video to be recognized, to obtain an expression label recognition result of the video to be recognized

FIG. 8

Segment a video to be recognized into a plurality of video segments, each video segment including at least one face image frame
S201

Extract and aggregate, for each video segment, features of face image frames in the video segment with a 3D convolutional network, to obtain feature data of the video segment, the feature data of the video segment including a temporal relationship between the face image frames
S202

Perform hidden transformation on the feature data of the plurality of video segments in sequence, to obtain hidden feature data of each video segment, where hidden feature data of any video segment is obtained according to feature data of the video segment and hidden feature data corresponding to a video segment preceding the video segment in sequence, and includes a temporal relationship between the video segment and the video segment preceding the video segment
S301

Splice the hidden feature data of the plurality of video segments, to obtain hidden feature data of the video to be recognized
S501

Adjust each feature parameter based on a weight corresponding to each feature parameter included in the hidden feature data of the video to be recognized, to obtain first reference feature data of the video to be recognized
S601

Perform regularization adjustment on multi-channel convolutional feature data of each video segment based on the first reference feature data, to obtain multi-channel convolutional feature data of each video segment after regularization adjustment, and obtain second reference feature data of the video to be recognized based on multi-channel convolutional feature data of the plurality of video segments after regularization adjustment
S602

Obtain the feature data of the video to be recognized based on the hidden feature data and the second reference feature data
S603

Perform nonlinear transformation on the second reference feature data, to obtain transformed feature data
S901

Perform a convolution operation on the transformed feature data and the hidden feature data of the video to be recognized, to obtain the feature data of the video to be recognized
S902

Recognize an expression label of the video to be recognized based on the feature data of the video to be recognized, to obtain an expression label recognition result of the video to be recognized
S903

FIG. 9

Segment a video to be recognized into a plurality of video segments, each video segment including at least one face image frame

S201

Perform, for any video segment, aggregation processing on features between the face image frames included in the video segment in sequence, to obtain the feature data of the video segment, where the feature data of any video segment is configured for representing a temporal relationship between the face image frames included in the video segment

S100
1

Aggregate feature data of the plurality of video segments, to obtain feature data of the video to be recognized, the feature data of the video to be recognized including a temporal relationship between the plurality of video segments

S203

Determine an expression label of the video to be recognized based on the feature data of the video to be recognized, to obtain an expression label recognition result of the video to be recognized

S204

## FIG. 10

Evenly segment a video to be recognized into a plurality of video segments, where each video segment corresponds to the same duration

S1101

Evenly segment a video to be recognized into a plurality of video segments, where each video segment corresponds to the same quantity of image frames

S1102

Extract and aggregate, for each video segment, features of face image frames in the video segment with a 3D convolutional network, to obtain feature data of the video segment, the feature data of the video segment including a temporal relationship between the face image frames

S202

Aggregate feature data of the plurality of video segments, to obtain feature data of the video to be recognized, the feature data of the video to be recognized including a temporal relationship between the plurality of video segments

S203

Determine an expression label of the video to be recognized based on the feature data of the video to be recognized, to obtain an expression label recognition result of the video to be recognized

S204

## FIG. 11

Segment a video to be recognized into a plurality of video segments, each video segment including at least one face image frame $\qquad$ S201

Extract and aggregate, for each video segment, features of face image frames in the video segment with a 3D convolutional network, to obtain feature data of the video segment, the feature data of the video segment including a temporal relationship between the face image frames $\qquad$ S202

Aggregate feature data of the plurality of video segments, to obtain feature data of the video to be recognized, the feature data of the video to be recognized including a temporal relationship between the plurality of video segments $\qquad$ S203

Recognize an expression in each video segment in the video to be recognized based on the feature data of the video to be recognized $\qquad$ S1201

If a specified expression is recognized in at least one video segment, obtain a recognition result that the video to be recognized includes the specified expression $\qquad$ S1202

If the specified expression is not recognized in any video segment, obtain a recognition result that the video to be recognized does not include the specified expression $\qquad$ S1203

FIG. 12

Instance generation module 1301

Feature extraction module 1302

R3D → Instance-level feature
R3D → Instance-level feature
R3D → Instance-level feature
R3D → Instance-level feature

Instance aggregation module 1303

DLIAM → Packet-level feature

Full convolution module 1304

Fully convolutional layer → Expression label recognition result

FIG. 13

**Long time series dynamic instance aggregation module DLIAM**

Bidirectional long short-term memory network BiLSTM 1401

Instance-level feature

Instance-level feature

Instance-level feature

Instance-level feature

Instance-level feature

Instance-level feature

Instance-level feature

Instance-level feature

Multi-head self-attention network 1402

Multi-instance dynamic regularization network 1403

Sigmoid function

One-dimensional convolutional network 1404

# FIG. 14

Multi-instance dynamic
regularization network

Dynamic
regularization

Instance

Batch

Channel

||

Instance-level
regularization

+

Packet-level
regularization

FIG. 15

Facial expression recognition apparatus

Segmentation processing module 1601

First aggregation module 1602

Second aggregation module 1603

Recognition module 1604

FIG. 16

1700

CPU 1701

ROM 1702

RAM 1703

1704

I/O interface 1705

Input part 1706

Output part 1707

Storage part 1708

Communication part 1709

Driver 1710

Removable medium 1711

FIG. 17

## INTERNATIONAL SEARCH REPORT

| International application No. |
| --- |
| **PCT/CN2024/076626** |

**A.   CLASSIFICATION OF SUBJECT MATTER**

G06V40/16(2022.01)i;  G06V20/40(2022.01)i;  G06V10/82(2022.01)i;  G06N3/044(2023.01)i

According to International Patent Classification (IPC) or to both national classification and IPC

**B.   FIELDS SEARCHED**

Minimum documentation searched (classification system followed by classification symbols)

IPC:  G06V G06N

Documentation searched other than minimum documentation to the extent that such documents are included in the fields searched

Electronic data base consulted during the international search (name of data base and, where practicable, search terms used)

CNKI, IEEE, CNABS, VEN, CNTXT, WOTXT, USTXT, EPTXT: 视频, 图像, 帧, 表情, 识别, 分类, 权重, 三维, 神经网络, 递归, 循环, video, image, frame, expression, recognition, classify, weight, 3D, three dimensional, neural network, RNN

**C.   DOCUMENTS CONSIDERED TO BE RELEVANT**

| Category* | Citation of document, with indication, where appropriate, of the relevant passages | Relevant to claim No. |
| --- | --- | --- |
| PX | CN 117218695 A (TENCENT TECHNOLOGY (SHENZHEN) CO., LTD.) 12 December 2023 (2023-12-12) <br> claims 1-17, and description, paragraphs 35-47 | 1-17 |
| X | CN 113435330 A (PING AN TECHNOLOGY (SHENZHEN) CO., LTD.) 24 September 2021 (2021-09-24) <br> description, paragraphs 28-77 and 110-111 | 1, 10-17 |
| Y | CN 113435330 A (PING AN TECHNOLOGY (SHENZHEN) CO., LTD.) 24 September 2021 (2021-09-24) <br> description, paragraphs 28-77 and 110-111 | 2-4 |
| Y | WO 2022111236 A1 (CENTRAL CHINA NORMAL UNIVERSITY) 02 June 2022 (2022-06-02) <br> description, paragraphs 47-53 | 2-4 |
| A | US 2022269879 A1 (QUALCOMM INC.) 25 August 2022 (2022-08-25) <br> entire document | 1-17 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 April 2024** | **25 April 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/076626**

| Patent document cited in search report | | | Publication date (day/month/year) | Patent family member(s) | | | Publication date (day/month/year) |
|---|---|---|---|---|---|---|---|
| CN | 117218695 | A | 12 December 2023 | None | | | |
| CN | 113435330 | A | 24 September 2021 | None | | | |
| WO | 2022111236 | A1 | 02 June 2022 | US | 2023298382 | A1 | 21 September 2023 |
| | | | | CN | 112418095 | A | 26 February 2021 |
| US | 2022269879 | A1 | 25 August 2022 | EP | 4298616 | A1 | 03 January 2024 |
| | | | | KR | 20230150273 | A | 30 October 2023 |
| | | | | US | 11756334 | B2 | 12 September 2023 |
| | | | | WO | 2022182447 | A1 | 01 September 2022 |
| | | | | CN | 116964643 | A | 27 October 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310401592